(19) Europäisches Patentamt
European Patent Office
Office européen des brevets

(11) **EP 4 083 920 A1**

(12) **EUROPEAN PATENT APPLICATION**


(43) Date of publication:
**02.11.2022 Bulletin 2022/44**

(21) Application number: **21211620.6**

(22) Date of filing: **01.12.2021**

(51) International Patent Classification (IPC):
***G06T 7/73*** *(2017.01)*

(52) Cooperative Patent Classification (CPC):
**G06T 7/73**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2021 KR 20210053759**



(71) Applicants:
- **Samsung Electronics Co., Ltd.**
  **Gyeonggi-do 16677 (KR)**
- **University Of Seoul Industry Cooperation Foundation**
  **Dongdaemun-gu, Seoul 02504 (KR)**

(72) Inventors:
- **JEON, Myungjae**
  **16678 Suwon-si (KR)**
- **KIM, Kichul**
  **02504 Seoul (KR)**
- **KWON, Namseop**
  **16678 Suwon-si (KR)**
- **LEE, Hongseok**
  **16678 Suwon-si (KR)**
- **KIM, San**
  **02504 Seoul (KR)**
- **SEONG, Wooseok**
  **02504 Seoul (KR)**
- **CHOI, Seongmin**
  **02504 Seoul (KR)**

(74) Representative: **Arnold & Siedsma**
**Bezuidenhoutseweg 57**
**2594 AC The Hague (NL)**


(54) **METHOD AND APPARATUS FOR ACCELERATING SIMULTANEOUS LOCALIZATION AND MAPPING**


(57) Provided is a processor configured to compute elements affecting an optimization matrix in connection with a first measurement, among elements of a Hessian matrix, instead of generating a whole Hessian matrix for a map point and a camera pose based on all measurements and accumulate the computed elements over the optimization matrix used to perform optimization operations in relation to states of the map point and the camera pose.


FIG. 11

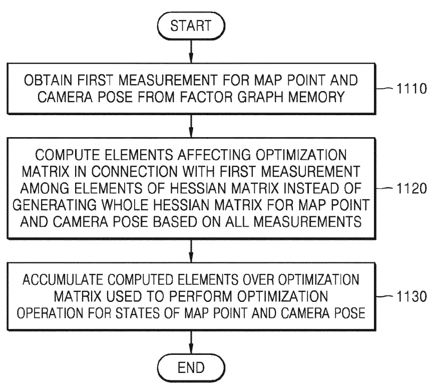


EP 4 083 920 A1

## Description

BACKGROUND

### 1. Field

The disclosure relates to methods and apparatuses for accelerating simultaneous localization and mapping.

### 2. Description of the Related Art

Simultaneous localization and mapping (SLAM) is a technology for obtaining information about peripheral areas by an apparatus moving along arbitrary spaces and estimating a map of the spaces as well as a current location of the apparatus based on the obtained information. SLAM technology is used in various fields including augmented reality (AR), robots, autonomous cars, etc. For example, an apparatus for performing SLAM may obtain an image of a space by using a sensor such as a camera, etc., and estimate a map of the space and a current location thereof through an analysis on the image and coordinates set-up.

SLAM may be divided into front-end for extracting feature points and performing operations of three-dimensional spatial coordinates based on information obtained from a sensor, and back-end for optimizing map information and current location information based on data received from the front-end. While the front-end considers only the increment of location movement, the back-end optimizes location information based on the map, and thus has a significant influence on the overall performance of SLAM. Meanwhile, operation quantity required for the back-end may vary depending on the size of a map, the size of sensor data, the required degree of precision, etc., and a method of performing a large volume of operations with high speed and low power may be required in SLAM using combinations of various sensors.

SUMMARY

Provided are methods and apparatuses for accelerating simultaneous localization and mapping (SLAM). The technical objects which the disclosure aims to achieve are not limited to the foregoing, and other technical objects may be inferred from the following embodiments.

Additional aspects will be set forth in part in the description which follows and, in part, will be apparent from the description, or may be learned by practice of the presented embodiments of the disclosure.

According to an aspect of the disclosure, there is provide an apparatus for accelerating simultaneous localization and mapping (SLAM) including: a memory; and a processor configured to: obtain a first measurement, among a plurality of measurements, for a map point and a camera pose from the memory, determine, based on the first measurement, one or more elements corresponding to an optimization matrix, among a plurality of elements of a Hessian matrix, without generating an entirety of the Hessian matrix for the map point and the camera pose based on all of the plurality of measurements, and accumulate the determined one or more elements over the optimization matrix used to perform optimization operations corresponding to the map point and the camera pose.

The processor may include a pipeline structure configured to sequentially perform first operations related to the first measurement over consecutive cycles after the first measurement is loaded in a first cycle, and wherein the pipeline structure may be configured to perform second operations related to a second measurement, following the first operations regarding the first measurement after the second measurement is loaded in a second cycle which follows the first cycle.

The processor may be further configured to determine the one or more elements corresponding to the optimization matrix by computing first elements of a first matrix block for the camera pose, second elements of a second matrix block for the map point, and third elements of a third matrix block for at least one camera pose corresponding to the map point based on the first measurement.

The first measurement may include a first map point and at least one first camera pose corresponding to the first map point.

The processor may be further configured to perform optimization operations corresponding to states of the map point and the camera pose by using the optimization matrix based on elements sequentially determined for all measurements being accumulated over the optimization matrix.

The first measurement may correspond to a result of performing front-end operations for data obtained from a sensor including at least one of a camera, an inertial measurement unit (IMU), a depth sensor, a global positioning system (GPS), or an odometer.

Based on the first measurement corresponding to the result of performing the front-end operations for the data obtained from the camera and the IMU, the processor may be further on configured to divide the first measurement into a first part corresponding to both of the camera and the IMU, and a second part corresponding only by the IMU.

The processor may be further configured to: based on the first part: determine first elements of a first matrix block for the camera pose, determine second elements of a second matrix block for the map point, determine third elements of a third matrix block for at least one camera pose corresponding to the map point, by using the first part, accumulate the first elements, the second elements and the third elements over the optimization matrix, and based on the second part: determine fourth elements of a fourth matrix block for the camera pose, and accumulate the fourth elements over the optimization matrix.

The processor may be further configured to divide operations to determine the one or more elements into a plurality of sub-tracks.

A track length of the plurality of sub-tracks may be set based on a number of camera poses in which the processor is able to perform operations simultaneously.

According to another aspect of the disclosure, there is provided a method of accelerating simultaneous localization and mapping (SLAM), the method including: obtaining a first measurement, among a plurality of measurements, for a map point and a camera pose from a memory, determining, based on the first measurement, one or more elements corresponding to an optimization matrix, among a plurality of elements of a Hessian matrix, without generating an entire the Hessian matrix for the map point and the camera pose based on all of the plurality of measurements, and accumulating the determined one or more elements over the optimization matrix used to perform optimization operations corresponding to the map point and the camera pose.

The method may further include sequentially performing first operations related to the first measurement over consecutive cycles after the first measurement is loaded in a first cycle; and performing second operations related to a second measurement, following the first operations regarding the first measurement, after the second measurement is loaded in a second cycle which follows the first cycle.

The determining of the one or more elements corresponding to the optimization matrix in connection with the first measurement may include determining first elements of a first matrix block for the camera pose, second elements of a second matrix block for the map point, and third elements of a third matrix block for at least one camera pose corresponding to the map point based on the first measurement.

The first measurement may include a first map point and at least one first camera pose corresponding to the first map point.

The method may further include performing optimization operations corresponding to states of the map point and the camera pose by using the optimization matrix based on elements sequentially determined for all measurements being accumulated over the optimization matrix.

The first measurement may correspond to a result of performing front-end operations for data obtained from a sensor including at least one of a camera, an inertial measurement unit (IMU), a depth sensor, a global positioning system (GPS), or an odometer.

The method may further include, based on the first measurement corresponding to the result of performing the front-end operations for the data obtained from the camera and the IMU, dividing the first measurement into a first part corresponding to both of the camera and the IMU, and a second part corresponding to only by the IMU.

The method may further include, based on the first part: determining first elements of a first matrix block for the camera pose, determining second elements of a second matrix block for the map point, determining third elements of a third matrix block for at least one camera pose corresponding to the map point, by using the first part, and accumulating the first elements, the second elements and the third elements over the optimization matrix; and based on the second part: determining fourth elements of a fourth matrix block for the camera pose and accumulating the fourth elements over the optimization matrix.

The method may further include dividing operations to determine the one or more elements into a plurality of sub-tracks.

According to another aspect of the disclosure, there is provided a computer-readable recording medium on which a program for executing a method of accelerating simultaneous localization and mapping (SLAM), the method including: obtaining a first measurement, among a plurality of measurements, for a map point and a camera pose from a memory, determining, based on the first measurement, one or more elements corresponding to an optimization matrix, among a plurality of elements of a Hessian matrix, without generating an entire the Hessian matrix for the map point and the camera pose based on all of the plurality of measurements, and accumulating the determined one or more elements over the optimization matrix used to perform optimization operations corresponding to the map point and the camera pose.

According to another aspect of the disclosure, there is provided an apparatus for accelerating simultaneous localization and mapping (SLAM) including: a memory; and a processor configured to: obtain a first measurement, among a plurality of measurements, for a map point and a camera pose from the memory, determine only first elements of an optimization matrix, the first elements corresponding to the map point and the camera pose in the first measurement, update the first elements into the optimization matrix, and perform optimization operations corresponding to the map point and the camera pose based on the optimization matrix.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a perspective view of a wearable electronic device according to an example embodiment;
FIG. 2 is a perspective view of a wearable electronic device according to another example embodiment;
FIG. 3 is a block diagram illustrating components of an apparatus for accelerating SLAM according to an example embodiment;
FIGS. 4 to 10 are diagrams for explaining a process of performing optimization operations for states of map points and camera poses according to an example embodiment;
FIG. 11 is a flowchart of a method of accelerating SLAM according to an example embodiment;
FIGS. 12 and 13 are diagrams for explaining a process of computing elements of an optimization matrix based on a single measurement according to an example embodiment;
FIG. 14 is a diagram illustrating components of an SLAM accelerator according to an example embodiment;
FIGS. 15 and 16 are diagrams showing an IMU Jacobian matrix and an IMU Hessian matrix according to an example embodiment;
FIG. 17 is a schematic diagram illustrating an overall process of performing optimization of state data by an SLAM accelerator according to an example embodiment;
FIG. 18 is a flowchart of a method of performing optimization operations by an SLAM accelerator considering a hardware resource according to an example embodiment;
FIG. 19 illustrates a Hessian matrix for performing Schur-complement operations according to an example embodiment;
FIG. 20 is a block diagram of a Schur-complement operator according to an example embodiment;
FIG. 21 is a block diagram of a W supplier of a Schur-complement operator according to an example embodiment;
FIG. 22 is a block diagram of a Q generator of a Schur-complement operator according to an example embodiment;
FIG. 23 is a block diagram of a vector-scalar product array of a Schur-complement operator according to an example embodiment;
FIG. 24 is a block diagram of a tensor product array of a Schur-complement operator according to an example embodiment; and
FIG. 25 is a diagram for explaining a pipeline structure of an SLAM accelerator according to an example embodiment.

DETAILED DESCRIPTION

Reference will now be made in detail to embodiments, examples of which are illustrated in the accompanying drawings, wherein like reference numerals refer to like elements throughout. In this regard, the example embodiments may have different forms and should not be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

General terms which are currently used widely have been selected for use in consideration of theirs functions in example embodiments; however, such terms may be changed according to an intention of a person skilled in the art, precedents, advent of new technologies, etc. Further, in certain cases, terms have been arbitrarily selected, and in such cases, meanings of the terms will be described in detail in corresponding descriptions. Accordingly, the terms used in the example embodiments should be defined based on their meanings and overall descriptions of the embodiments, not simply by their names.

In some descriptions of the example embodiments, when a portion is described as being connected to another portion, the portion may be connected directly to another portion, or electrically connected to another portion with an intervening portion therebetween. An expression used in the singular encompasses the expression of the plural, unless it has a clearly different meaning in the context. When a portion "includes" an element, another element may be further included, rather than excluding the existence of the other element, unless otherwise described.

The terms "comprise" or "include" used in the example embodiments should not be construed as including all components or operations described in the specification, and may be understood as not including some of the components or operations, or further including additional components or operations.

While such terms as "first," "second," etc., may be used to describe various components, such components must not be limited to the above terms. The above terms are used only to distinguish one component from another.

The descriptions of the following embodiments should not be construed as limiting the scope of rights, and matters that those skilled in the art can easily derive should be construed as being included in the scope of rights of the embodiments. Hereinafter, example embodiments will be described in detail as an example, with reference to the attached drawings.

FIG. 1 is a perspective view of a wearable electronic device according to an example embodiment.

Referring to FIG. 1, a wearable electronic device 100 may include a lens 110, a connecting part 120 for fixing the device to a part of user's body (e.g., the head, etc.) and a sensor. For example, the wearable electronic device 100 may be augmented reality (AR) glasses or smart glasses, but the disclosure is not limited thereto. The wearable electronic device 100 may perform simultaneous localization and mapping (SLAM).

According to an example embodiment, the connecting part 120 of the wearable electronic device 100 may include a projector, a processor 130, and an accelerator 140.

According to an example embodiment, the projector may receive data from the outside and emit a beam generated based on the received data to the lens 110. The beam emitted from the projector may be refracted from an object (e.g., a prism) having a refractive index and displayed on the lens 110. The refractive index may be an arbitrary index.

According to an example embodiment, the processor 130 may perform overall functions to control the wearable electronic device 100. The processor 130 may be implemented by an array of multiple logic gates, and may be implemented by a combination of a general purpose microprocessor and a memory in which a program executable by the microprocessor is stored.

The processor 130 may receive sensing data regarding the surrounding environment from the sensor. The sensor may include at least one of one or more cameras, an inertial measurement unit (IMU), a depth sensor (e.g., LiDAR), a global positioning system (GPS), and an odometer. The camera may include a pixel array, a complementary metal oxide semiconductor (CMOS) image sensor (CIS), a charge coupled device (CCD) image sensor, etc., but the disclosure is not limited thereto. For example, the processor 130 may obtain image data regarding the surrounding environment using the camera. Further, the processor 130 may obtain data regarding the location, orientation, speed, acceleration, etc. of the wearable electronic device 100 by using the IMU.

According to an example embodiment, the processor 130 may extract keypoints of sensing data received from the sensor, perform operations regarding spatial coordinates, and transmit operation results to the accelerator 140. For example, the processor 130 may extract at least one keypoint from the image data obtained by the camera based on a key point extraction algorithm. The processor 130 may perform operations regarding spatial coordinates of the wearable electronic device 100 based on location and orientation data obtained by the IMU. That is, the processor 130 may perform front-end operations of SLAM.

According to an example embodiment, the processor 130 may include a general central processing unit (CPU), image signal processor (ISP), image processing unit, etc., and may not be optimized for performing back-end operations of SLAM. The accelerator 140 is an apparatus for accelerating SLAM, and may be a processing unit optimized for performing back-end operations of SLAM. The accelerator 140 may be implemented by an array of multiple logic gates, and may be implemented by a combination of a microprocessor and a memory in which a program executable by the microprocessor is stored.

According to an example embodiment, in FIG. 1, the processor 130 and the accelerator 140 are described as being arranged in the connecting part 120 of the wearable electronic device 100, but the position of the processor 130 and the accelerator 140 is not limited thereto. For example, the processor 130 and the accelerator 140 may be arranged on the front of the wearable electronic device 100. In this case, the processor 130 and the accelerator 140 may be placed in a frame area surrounding the periphery of the lens 110.

Also, in FIG. 1, the processor 130 and the accelerator 140 are described as being apart from each other, but the accelerator 140 may be embedded in the processor 130. Further, the processor 130 embedded with the accelerator 140, a memory, and the sensor may be formed in an integrated manner. For example, the processor 130, the accelerator 140, and the memory may be embedded in a sensor itself, such as a camera, an IMU, etc., and operations regarding data obtained from the sensor may be performed in real time. Accordingly, as no separate interface component is required for data exchange among the sensor, the processor 130, the accelerator 140, and the memory, the size of device as a whole may be reduced, and power consumption may also decrease.

According to an example embodiment, the wearable electronic device 100 may further include a communication interface. The communication interface may be wireless or wired, and relay data exchange between external devices and the wearable electronic device 100. The wearable electronic device 100 may transmit data processed by the processor 130 and the accelerator 140 through the communication interface to external devices, and may receive data from external devices.

FIG. 2 is a perspective view of a wearable electronic device according to another example embodiment.

Referring to FIG. 2, a wearable electronic device 200 may include a lens 210, a connecting part 220 for fixing the device to a part of the user's body, and a sensor. As the wearable electronic device 200, the lens 210, the connecting part 220, and the sensor of FIG. 2 correspond to the wearable electronic device 100, the lens 110, the connecting part 120, and the sensor of FIG. 1, respectively, redundant descriptions thereon will be omitted.

According to an example embodiment, the wearable electronic device 200 may be connected to an external device 250 (e.g., a smartphone, a set-top box, etc.) through a communication interface 255. In FIG. 2, the communication interface 255 is described as providing wired connection, but the disclosure is not limited thereto. The communication interface 255 may provide wireless connection. The external device 250 may include a processor 230 and an accelerator 240. As the processor 230 and the accelerator 240 of FIG. 2 correspond to the processor 130 and the accelerator 140 of FIG. 1, respectively, redundant descriptions thereon will be omitted.

According to an example embodiment, the wearable electronic device 200 may transmit sensing data obtained by the sensor to the external device 250 via the communication interface 255. The processor 230 of the external device 250 may perform front-end operations in relation to the sensing data received from the wearable electronic device 200, and transmit operation results to the accelerator 240. The accelerator 240 may perform back-end operations based on the data obtained from the processor 230, and transmit operation results back to the wearable electronic device 200 through the communication interface 255.

Unlike the front-end that considers only the increment of location movement, as the back-end optimizes location information based on the map, it has a significant influence on the overall performance of SLAM. Meanwhile, operation quantity required for the back-end may vary depending on the size of a map, the size of sensor data, the required degree of precision, etc., and a method of performing a large volume of operations with high speed and low power may be required in SLAM using combinations of various sensors. Hereinafter, the process of accelerating back-end operations by the accelerator 140 of FIG. 1 or the accelerator 240 of FIG. 2 is described in more detail.

FIG. 3 is a block diagram illustrating components of an apparatus for accelerating SLAM according to an example embodiment.

An SLAM accelerator 30 is an apparatus for accelerating SLAM, and may correspond to the accelerator 140 of FIG. 1 or the accelerator 240 of FIG. 2. Although an example embodiment illustrates the SLAM accelerator 30 being employed in AR glasses or smart glasses shown in FIGS. 1 and 2, the disclosure is not limited thereto. As such, according to other example embodiment, the SLAM accelerator 30 may be employed in any device which requires recognition of location or space, such as robots, drones, autonomous cars, etc. without limitation.

Referring to FIG. 3, the SLAM accelerator 30 may include a factor graph memory 310 and a back-end processor 320. Meanwhile, only the components related to the example embodiments are shown in the SLAM accelerator 30 of FIG. 3. Accordingly, it is apparent to a person skilled in the art that the SLAM accelerator 30 may further include other components in addition to the components shown in FIG. 3.

The factor graph memory 310 is hardware for storing various data processed by the SLAM accelerator 30, and for example, the factor graph memory 310 may store data processed or to be processed by the SLAM accelerator 30. The factor graph memory 310 may include random access memory (RAM), such as dynamic random access memory (DRAM), static random access memory (SRAM), etc., read-only memory (ROM), electrically erasable programmable read-only memory (EEPROM), a CD-ROM, a Blu-ray disk, other optical disk storages, a hard disk drive (HDD), a solid state drive (SSD), or flash memory. However, the present disclosure is not limited thereto.

The factor graph memory 310 may store data received from a front-end processor (e.g., the processor 130 of FIG. 1 or the processor 230 of FIG. 2). For example, the front-end processor may extract keypoints (i.e., feature points) and perform operations regarding spatial coordinates based on the sensing data obtained by the sensor. The factor graph memory 310 may receive data corresponding to operation results from the front-end processor and store the received data.

The back-end processor 320 may perform back-end operations for optimization of SLAM. For example, the back-end processor 320 may receive data from the factor graph memory 310 and perform optimization operations in relation to the received data. The received data may correspond to results of movement accumulation of a sensor fusion performed by the front-end processor. The back-end processor 320 may perform repetitive operations in relation to data received from the front-end processor or the factor graph memory 310. For example, the back-end processor 320 may perform operations for estimation of location of the electronic device (e.g., the wearable electronic device 100 of FIG. 1 or the wearable electronic device 200 of FIG. 2) and mapping based on matrix and/or vector operations.

According to an example embodiment, the back-end processor 320 may estimate the location of the electronic device in the created map. For example, the back-end processor 320 may estimate the location of the moving electronic device in the created map based on the repetitively performed operations. The back-end processor 320 may estimate the location of the electronic device in real time, and data regarding the estimated location may be updated in real time.

The operations performed by the back-end processor 320 may include a bundle adjustment (BA). When a set of images illustrating a plurality of three-dimensional points from different perspectives is given, the BA may refer to refinement of the three-dimensional coordinates explaining scene geometry, parameters of relative motion, and optical characteristics of the camera in real time according to optimization criteria that accompany image projections corresponding to the respective points. Hereinafter, the process of optimizing three-dimensional coordinates of the map points and the camera poses will be described in detail with reference to FIGS. 4 to 10.

FIGS. 4 to 10 are diagrams for explaining a process of performing optimization operations for states of map points and camera poses according to an According to an example embodiment.

FIG. 4 illustrates an example of an electronic device (e.g., the wearable electronic device 100 of FIG. 1 or the wearable electronic device 200 of FIG. 2) obtaining images of peripheral space by using a sensor, such as a camera. For instance, according to movements, etc. of the electronic device, the camera pose may be changed for each frame and the location of the map point in a frame photographed by the camera, may be changed.

As shown in the example of FIG. 4, the camera pose may change in order of $C_0$, $C_1$, and $C_2$ in accordance with time flow, and the location of the map point $P_0$ in a frame may also change in order of $p_0$, $p_1$, and $p_2$. Meanwhile, apart from the measurements $p_0$, $p_1$, and $p_2$ of the map point $P_0$, estimates $\widehat{p_0}$, $\widehat{p_1}$, and $\widehat{p_2}$ may be obtained by reprojection using three-dimensional coordinates of the map point $P_0$. In the example of FIG. 4, as $p_0$ is identical to $\widehat{p_0}$, $\widehat{p_0}$ has been omitted.

The back-end operations of SLAM may set an error e representing a difference between a measurement p and the estimate $\hat{\boldsymbol{p}}$ as an objective function, and include operations for estimating states in which the objective function is minimized for all measurements. The back-end operation of SLAM may be represented by the following Equation 1.

【Equation 1】

$$\boldsymbol{e}_{i,j}(\boldsymbol{X}) = p_{i,j} - \hat{p}(\boldsymbol{X}),\ \boldsymbol{X} = \left(P_j, C_i\right)$$

$$argmin_X \sum_i \sum_j \left\| e_{i,j}(\boldsymbol{X}) \right\|^2$$

i: frame number
j: map point number

**[0062]** According to the above Equation 1, i represents a frame number, j represents a map point number, and X, which represents a state to be estimated through optimization operations, includes a camera pose $C_i$ and a map point (landmark) $P_j$.

FIG. 5 illustrates an example of a state vector $X_k$ at a time point k when the number of camera poses is N (N is any natural number), and the number of map points is M (M is any natural number). The camera pose $C_i$(i = 1,... , N) may include rotation elements (e.g., $R_{xi}$, $R_{yi}$, and $R_{zi}$) for three axes (e.g., x-axis, y-axis, and z-axis), translation elements for three axes (e.g., $T_{xi}$, $T_{yi}$, and $T_{zi}$), velocity elements for three axes (e.g., $V_{xi}$, $V_{yi}$, and $V_{zi}$), acceleration elements for three axes (e.g., bias elements of an accelerometer $\boldsymbol{B}_{a_{xi}}$, $\boldsymbol{B}_{a_{yi}}$, and $\boldsymbol{B}_{a_{zi}}$), and angular acceleration elements for three axes (e.g., bias elements of a gyroscope $B_{w_{xi}}$, $\boldsymbol{B}_{w_{yi}}$, and $\boldsymbol{B}_{w_{zi}}$). The map point $P_j$(j = 1,... , M) may include location elements for three axes (e.g., $P_{xj}$, $P_{yj}$, and $P_{zj}$).

FIG. 6 illustrates the overall process of back-end operations when a camera measurement corresponding to a result of font-end operation regarding sensing data obtained from the camera is input. The feature point of the camera measurement may include two-dimensional coordinates.

When the camera measurement is input, estimates may be obtained based on reprojection using three-dimensional coordinates of the map point, and based on a difference between the measurements and the estimates, the error e may be calculated. When the error is calculated, operations for optimizing the objective function according to Equation 1 may be performed.

For optimization of the objective function according to Equation 1, a Gauss-Newton method according to the following Equation 2 may be used.

【Equation 2】

$$\mathbf{X_{k+1}} = \mathbf{X_k} - \left(J_e^T(X_k)J_e(X_k)\right)^{-1} J_e^T(X_k)\mathbf{e}(\mathbf{X_k})$$

$$\Delta X = \left(J_e^T(X_k)J_e(X_k)\right)^{-1} J_e^T(X_k)\mathbf{e}(\mathbf{X_k})$$

$$\left(J_e^T(X_k)J_e(X_k)\right)\Delta X = J_e^T(X_k)\mathbf{e}(\mathbf{X_k})$$

$$H(X_k)\Delta X = b(\mathbf{X_k})$$

Each time a measurement is input, a state change $\Delta X$ for reducing the error according to the above Equation 1 may be estimated. Meanwhile, to estimate the state change $\Delta X$, a Jacobian matrix $J_e(X_k)$, which represents partial differentiation of the error, and a Hessian matrix ($H(X_k)$), which is a product of a Jacobian inverse matrix $(J_e^T(\mathrm{X_k}))$ and a Jacobian matrix ($J_e(X_k)$), may need to be computed.

In one example, when $f_x$ and $f_y$ represent a focal distance of the camera based on the x-axis and the y-axis, respectively, $X'$, $Y'$, and $Z'$ represent three-dimensional coordinate elements of the map point based on a camera coordinate system, and R represents a rotation element of the camera, the Jacobian matrix may be calculated according to the following Equation 3.

【Equation 3】

$$J = [J_C|J_P] = -\left[\begin{matrix} \frac{f_x}{Z'} & 0 & -\frac{f_xX'}{Z'^2} & -\frac{f_xX'Y'}{Z'^2} & f_x + \frac{f_xX'^2}{Z'^2} & -\frac{f_xY'}{Z'} \\ 0 & \frac{f_y}{Z'} & -\frac{f_xY'}{Z'^2} & -f_y - \frac{f_yY'^2}{Z'^2} & \frac{f_yX'Y'}{Z'^2} & \frac{f_yX'}{Z'} \end{matrix} \middle| \begin{pmatrix} \frac{f_x}{Z'} & 0 & -\frac{f_xX'}{Z'^2} \\ 0 & \frac{f_y}{Z'} & -\frac{f_xY'}{Z'^2} \end{pmatrix} R \right]$$

According to Equation 3, the Jacobian matrix may be calculated by applying Lie algebra to a Jacobian matrix block $J_C$ for a camera pose, and a Jacobian matrix block $J_P$ for a map point. The Jacobian matrix block $J_C$ for the camera pose may be a matrix obtained by partial differentiating a reprojection error by the camera pose, and the Jacobian matrix block $J_P$ for the map point may represent a matrix obtained by partial differentiating the reprojection error by the map point.

As the Hessian matrix corresponds to the product of the Jacobian inverse matrix and the Jacobian matrix, it may be calculated based on the Jacobian matrix blocks. For example, the Hessian matrix may be calculated according to the following Equation 4.

【Equation 4】

$$H = J^TJ = \begin{bmatrix} J_C{}^T \\ J_P{}^T \end{bmatrix} \cdot [J_C|J_P] = \begin{bmatrix} J_C{}^TJ_C & J_C{}^TJ_P \\ J_P{}^TJ_C & J_P{}^TJ_P \end{bmatrix} = \begin{bmatrix} U & W \\ W^T & V \end{bmatrix}$$

According to the above Equation 4, the Hessian matrix may be divided into four Hessian matrix blocks U, W, $W^T$, and V. Referring to Equation 4, the last line of Equation 2 may be represented by the following Equation 5.

【Equation 5】

$$\begin{bmatrix} U & W \\ W^T & V \end{bmatrix} \begin{bmatrix} \Delta X_c \\ \Delta X_p \end{bmatrix} = \begin{bmatrix} r_c \\ r_p \end{bmatrix}$$

**Hessian Matrix (H)** **b**

Referring to Equation 5, the state change ($\Delta X$) may include a state change $\Delta X_c$ for a camera pose, and a state change $\Delta X_p$ for a map point.

Meanwhile, as described above with reference to FIG. 5, as the camera pose includes 15 elements, and the map point includes three elements, when the number of camera poses is N, and the number of map points is M, the Hessian matrix may be a square matrix having a size of (15N + 3M) x (15N + 3M). Given the nature of SLAM, as measurement is performed for a number of map points, the size of the Hessian matrix may be quite large. Accordingly, since solving a Hessian matrix directly to estimate the state change $\Delta X$ may take significant operations, alternative methods may be required.

According to an example embodiment, as in the following Equation 6, the state change $\Delta X$ may be estimated by Schur-complement operations using the Hessian matrix blocks U, W, $W^T$, and V.

【Equation 6】

$$S \Delta X_c = s$$

$$S = U - WV^{-1}W^T$$

$$s = r_c - WV^{-1}r_p$$

$$\Delta X_P = V^{-1}(r_P - W^T \Delta X_C)$$

According to the Equation 6, the operation for estimating the state change $\Delta X$ is changed to the matrix operation only for the camera pose (i.e., the operation for the S matrix and s vector), and the state change ($\Delta X_c$) for the camera pose may be obtained first by the changed matrix operation. Then, the state change $\Delta X_p$ for the map point may be obtained through back substitution. As such, when Schur-complement operations are used to estimate the state change $\Delta X$, operations required for estimation may be reduced significantly, compared to the case of directly solving a Hessian matrix.

FIG. 7 illustrates an example of a factor graph between map points (landmark) and camera poses. In FIG. 7, C0 to C10 represent states of consecutive camera poses, and P0 to P13 represent states of map points observed at corresponding camera poses. Moreover, r represents the relation between the map points and the camera poses, and may indicate a reprojection error. For example, $r_{00}$ represents the relation between the camera pose C0 and the map point P0, $r_{01}$ represents the relation between the camera pose C0 and the map point PI, and $r_{1013}$ represents the relation between the camera pose C10 and the map point P13. Further, rb represents the relation between neighboring camera poses. For example, $rb_{01}$ represents the relation between the camera pose C0 and the camera pose C1.

FIG. 8 illustrates an example of the Jacobian matrix according to the factor graph of FIG. 7. The Jacobian matrix may include a Jacobian matrix block $\boldsymbol{J_c}$ for a camera pose and a Jacobian matrix block $\boldsymbol{J_P}$ for a map point. The elements of the Jacobian matrix may be determined according to the relation between the map point and the camera pose. The shaded portions in the Jacobian matrix of FIG. 8 correspond to elements representing the relation between the map points and the camera poses, and the portions which are not shaded may correspond to 0.

FIG. 9 illustrates an example of the Hessian matrix according to the factor graph of FIG. 7. The Hessian matrix may include a Hessian matrix block U for a camera pose, a Hessian matrix block V for a map point, a matrix block W for a camera pose corresponding to a map point, and a matrix block $W^T$, which is an inverse matrix of the matrix block W.

The matrix block W and the matrix block $W^T$ may represent the relation between the map point and the camera pose. For example, the map point P0 of the matrix block W may be obtained in one frame corresponding to the camera pose C0, and the map point P3 of the matrix block W may be obtained in five frames corresponding to C0 to C4.

The matrix block U and the matrix block V may be a diagonal matrix in which data is included only in diagonal elements, not in any other elements. For example, the matrix block U, which is a matrix block of the camera poses C0 to C10, may include data only in a point where the camera poses C0 and C0 meet, a point where the camera poses C1 and C1 meet,... , and a point where the camera poses C10 and C10 meet. In addition, the matrix block V, which is a matrix block for the map points P0 to P13, may include data only in a point where the map points P0 and P0 meet, a point where the map points P1 and P1 meet,..., and a point where the map points P13 and P13 meet.

FIG. 10 illustrates an example of an S matrix according to the factor graph of FIG. 7. As such, the S matrix for Schur-complement operations may be a matrix of the camera poses only, and the elements of the S matrix may be calculated based on the above Equation 6.

Meanwhile, FIGS. 7 to 10 are only provided as an example for explanation, and a person skilled in the art may easily understand that when the factor graph changes, the structures of the Hessian matrix, Jacobian matrix, and S matrix may be changed accordingly.

FIG. 11 is a flowchart of a method of accelerating SLAM according to an example embodiment.

Referring to FIG. 11, a method of accelerating SLAM includes operations to be processed in the SLAM accelerator 30 of FIG. 3. According to an example embodiment, the operations may be processed time sequentially in the SLAM accelerator 30. Although some descriptions are omitted below, when such descriptions have been provided above in relation to FIGS. 1 to 10, they may be applied to the method of accelerating SLAM illustrated in FIG. 11. Meanwhile, each operation of FIG. 11 may be performed by components included in the SLAM accelerator, for example, the factor graph memory 310 of FIG. 3, or the back-end processor 320 of FIG. 3.

In operation 1110, the SLAM accelerator may obtain the first measurement for a map point and a camera pose from the factor graph memory. The first measurement may correspond to a result of performing front-end operations for data obtained from a sensor including at least one of a camera, an IMU, a depth sensor, a GPS, and an odometer. The first measurement may include a first map point and at least one camera pose corresponding to the first map point.

The SLAM accelerator may include a pipeline structure configured to sequentially perform operations regarding the first measurement (i.e., operations corresponding to operations 1120 and 1130 to be described below) over consecutive cycles after the first measurement is loaded in a first cycle. The pipeline structure of the SLAM accelerator may perform operations regarding a second measurement, following the operations regarding the first measurement, when the second measurement is loaded in a second cycle following the first cycle. In other words, the SLAM accelerator may include a map point-based pipeline structure to perform factor generation and Schur-complement operations, which take significant operation quantity, with high speed.

In operation 1120, the SLAM accelerator may compute elements affecting an optimization matrix in connection with the first measurement, among elements of a Hessian matrix, instead of generating a whole Hessian matrix for map points and camera poses of all measurements. For example, the SLAM accelerator may compute elements of a matrix block for the camera pose, elements of a matrix block for the map point, and elements of a matrix block for at least one camera pose corresponding to the map point, by using the first measurement.

In operation 1130, the SLAM accelerator may accumulate the computed elements over the optimization matrix used to perform the optimization operations for states of the map point and the camera pose. According to an example embodiment, the SLAM accelerator may accumulate the computed elements over the optimization matrix by adding or inserting the computed elements at respective position in the optimization matrix. According to an example embodiment, the optimization matrix is updated with the computed elements. The SLAM accelerator may perform optimization operations regarding the states of the map point and the camera pose by using the optimization matrix when elements sequentially computed for all measurements are accumulated over the optimization matrix. The optimization operation may include Schur-complement operations, and the optimization matrix may include the S matrix.

According to an example embodiment, as described above with reference to FIG. 5, the camera pose may include 15 elements, and the map point may include three elements. In this case, when the number of camera poses is N, and the number of map points is M, the Hessian matrix may be a square matrix having a size of (15N + 3M) x (15N + 3M). Given the nature of SLAM, as measurement is performed for a number of map points, the size of the Hessian matrix may be quite large. Thus, it is difficult to generate a whole Hessian matrix and solve the generated Hessian matrix with high speed and low power.

According to an example embodiment, the SLAM accelerator may compute elements affecting an optimization matrix in connection with a single measurement, among elements of a Hessian matrix, instead of generating the Hessian matrix for map points and camera poses of all measurements. That is, the SLAM accelerator may selectively calculate elements that affect the S matrix in connection with the first measurement, among elements of a Hessian matrix, without generating an intermediary Jacobian matrix or a Hessian matrix. Accordingly, as no Jacobian matrix or Hessian matrix needs to be generated or stored, the memory size may be reduced. According to an example embodiment, the SLAM accelerator may compute elements affecting an optimization matrix in connection with a first measurement, among elements of a Hessian matrix all at one, without having to reload the first measurement. That is, once one measurement is loaded, operations regarding the measurement are processed all at once, and thus, the same measurement does not need to be reloaded, which may lead to an increased operation speed.

The elements calculated for a single measurement may be transmitted directly to a Schur-complement operator. For example, the elements calculated for a single measurement may be accumulated over an optimization matrix for Schur-complement operations. Hereinafter, the process of calculating elements affecting the optimization matrix by the SLAM accelerator will be described in detail with reference to FIGS. 12 and 13.

FIGS. 12 and 13 are diagrams for explaining a process of computing elements of an optimization matrix based on a single measurement according to an example embodiment.

FIG. 12 illustrates an example of measurements including camera poses C1 to C5 and map points P1 to P10. When the map point P1 is input, the SLAM accelerator may compute elements of the matrix block U for the camera pose, elements of the matrix block V for the map point, and elements of the matrix block W for at least one camera pose corresponding to the map point, by using the map point P1. In addition, the SLAM accelerator may calculate r vectors (e.g., $r_c$ and $r_p$ of Equation 5).

For example, when the map point P0 is observed in four frames corresponding to the camera poses C1 to C4, the SLAM accelerator may compute reprojection errors $\mathbf{e_{11}}$, $\mathbf{e_{21}}$, $\mathbf{e_{31}}$, and $\mathbf{e_{41}}$. Further, the SLAM accelerator may compute elements of the matrix block U, i.e., $\frac{\partial e_{11}}{\partial C_1}, \frac{\partial e_{21}}{\partial C_2}, \frac{\partial e_{31}}{\partial C_3}$, and $\frac{\partial e_{41}}{\partial C_4}$, an element of the matrix block V, i.e., $\frac{\partial e_{11}}{\partial P_1} + \frac{\partial e_{21}}{\partial P_1} + \frac{\partial e_{31}}{\partial P_1} + \frac{\partial e_{41}}{\partial P_1}$, and elements of the matrix block W, i.e., $\frac{\partial e_{11}}{\partial C_1}^T \frac{\partial e_{11}}{\partial P_1}, \frac{\partial e_{21}}{\partial C_2}^T \frac{\partial e_{21}}{\partial P_1}, \frac{\partial e_{31}}{\partial C_3}^T \frac{\partial e_{31}}{\partial P_1}$, and $\frac{\partial e_{41}}{\partial C_4}^T \frac{\partial e_{41}}{\partial P_1}$.

FIG. 13 illustrates examples of a Hessian matrix 1310 and an S matrix 1320. The SLAM accelerator may compute only the elements affecting the S matrix 1320 in connection with the map point P1, among the elements of the Hessian matrix 1310, as described with reference to FIG. 12. That is, SLAM accelerator may not generate the Hessian matrix 1310 by accumulating results of operations performed for each of the measurements. The SLAM accelerator may transmit the computed elements (e.g., U, V, W, and r elements) to the Schur-complement operator.

The SLAM accelerator may generate the S matrix 1320 having the same size as the matrix block U after computing the elements of the matrix block W and the matrix block V, and the elements of the matrix block U, according to Schur-complement operations. For example, the SLAM accelerator may calculate elements of the S matrix 1320 according to the following Equation 7.

【Equation 7】

$$S_{i1,i2} = U_{i1,i2} - \sum W_{i1,j} V^{-1}{}_{j} W^{T}{}_{i2,j}$$

In Equation 7, i1 and i2 represent an index of a camera pose, and j represents an index of a map point. In the example of FIG. 13, as the map point P1 is observed at the camera poses C1 to C4, a total of 16 elements of an S matrix, i.e., $S_{11}$ to $S_{44}$, may be calculated when the Schur-complement is applied. Meanwhile, as the S matrix has a transpose structure with respect to the diagonal, the SLAM accelerator may calculate only diagonal elements and upper triangular elements of the S matrix. As such, the SLAM accelerator according to the disclosure may perform optimization operations for minimizing errors in states of camera poses and map points with high speed and low power.

FIG. 14 is a diagram illustrating components of an SLAM accelerator according to an example embodiment.

Referring to FIG. 14, an SLAM accelerator may include a pipelined vision factor generator 1400. According to an example embodiment, the SLAM accelerator may be any one of the accelerator 140 of FIG. 1, the accelerator 240 of FIG. 2, or the SLAM accelerator 30 of FIG. 3. The vision factor generator 1400 may include a camera constraint generator 1410 and a Schur-complement operator 1420. The camera constraint generator 1410 may correspond to the component performing operations 1110 and 1120 of FIG. 11, and the Schur-complement operator 1420 may correspond to the component performing operation 1130 of FIG. 11. However, the disclosure is not necessarily limited thereto, and the vision factor generator 1400 may include any component suitable for performing the operations described with reference to FIG. 11.

According to an example embodiment, the SLAM accelerator may estimate a camera pose and a map point by using only data obtained from a camera. However, the disclosure is not limited thereto, and as such, according to another example embodiment, performance may be enhanced by using data obtained from other sensors, such as an IMU along with the aforementioned data from the camera. In this case, as shown in FIG. 14, the SLAM accelerator may further include an IMU constraint generator 1430. When the SLAM accelerator includes the IMU constraint generator 1430, the objective function according to Equation 1 may be extended to the following Equation 8.

【Equation 8】

$$argmin_X \sum_i \sum_j \left\| f_{rep}(C_i, P_j) \right\| + \sum_i \left\| f_{IMU}(C_i, C_{i+1}) \right\|$$

Further, the errors related to the IMU factor may be defined according to the following Equation 9.

【Equation 9】

$$e_r = Log((Exp(\Delta J^r{}_{ij}(b_i - b^{\wedge}{}_i))\Delta R_{ij})^T R_j R_i{}^T)$$
$$e_v = R_i(v_j - v_i - g\Delta t_{ij}) - (\Delta v_{ij} + \Delta J^v{}_{ij}(b_i - b^{\wedge}{}_i))$$
$$e_p = R_i\left(p_j - p_i - v_i\Delta t_{ij} - \frac{1}{2}g\Delta t^2{}_{ij}\right) - (\Delta p_{ij} + \Delta J^p{}_{ij}(b_i - b^{\wedge}{}_i))$$
$$e_b = b_j - b_i$$

In Equation 9, i and j represent a frame number (i.e., a camera pose number), and ij may indicate pre-integration from the i$^{th}$ frame into the j$^{th}$ frame.

The elements estimated by using the camera measurements among the elements of the state vector C for the camera pose described above with reference to FIG. 5, may include R and T, and the elements estimated by using the IMU measurements may include V, Ba, and Bw in addition to R and T. Thus, the state vector C for the camera pose may be divided into c and m, wherein c may include factors affected by both of the camera and the IMU, and m may include factors affected only by the IMU. Hereinafter, examples of a Jacobian matrix and a Hessian matrix when the IMU factor is also considered will be described with reference to FIGS. 15 and 16.

FIGS. 15 and 16 are diagrams showing an IMU Jacobian matrix and an IMU Hessian matrix according to an example embodiment.

Referring to the example of FIG. 15, the IMU Jacobian matrix may include c0 to c5 affected by both of the camera and the IMU, and also may include m0 to m5 affected only by the IMU as a factor. Further, the IMU Jacobian matrix may include elements only between two neighboring frames.

Referring to the example of FIG. 16, the IMU Hessian matrix also may include elements only between two neighboring frames. As such, as the IMU measurement is a factor irrelative to the map point, the IMU Hessian matrix may include only the matrix block U, not the matrix blocks W and V.

Accordingly, as illustrated in FIG. 14, the SLAM accelerator may compute an S matrix first by constituting the camera constraint generator 1410 and the Schur-complement operator 1420 as one block, and generate a final S matrix by adding an output value of the IMU constraint generator 1430 to the S matrix computed first by constituting the camera constraint generator 1410 and the Schur-complement operator 1420. When the S matrix and the s vector are generated, the SLAM accelerator may obtain state changes with optimized accumulated errors by performing equation operations using a linear solver 1440.

As such, when a measurement corresponds to a result of performing front-end operations on data obtained from the IMU, the SLAM accelerator (or the back-end processor included in the SLAM accelerator) may divide the measurement into a first part affected by both of the camera and the IMU, and a second part affected only by the IMU. The SLAM accelerator may compute elements of a matrix block for a camera pose, elements of a matrix block for a map point, and elements of a matrix block for at least one camera pose corresponding to the map point, and then accumulate the computed elements over the optimization matrix firstly by using the first part. Thereafter, the SLAM accelerator may compute elements of a matrix block for the camera pose by using the second part, and then accumulate the computed elements over the optimization matrix. According to an example embodiment, the SLAM accelerator may accumulate the computed elements over the optimization matrix using the second part after accumulating the computed elements over the optimization matrix using the first part.

FIG. 17 is a schematic diagram illustrating an overall process of performing optimization of state data by an SLAM accelerator according to an example embodiment.

Referring to FIG. 17, the back-end processor 320 may receive first data ($X_1$) for the map point and the camera pose from the factor graph memory 310. For example, the first data ($X_1$) received from the factor graph memory 310 may include a state of the map point $X_{P1}$ and a state of the camera pose $X_{C1}$.

The back-end processor 320 may obtain elements of the Jacobian matrix ($J_{IMU}$) for the IMU, elements of the Jacobian matrix ($J_{cam}$) for the camera pose, elements of the Jacobian matrix ($J_{point}$) for the map point, and elements of a vector (e) for errors by performing a Jacobian update 1710 for the first data.

The back-end processor 320 may obtain elements of the matrix blocks U, W, and V, and elements of the vector r by performing a hessian update 1720 for data output through the Jacobian update 1710.

Then, the back-end processor 320 may obtain a state change ($\Delta X$) with optimized accumulated errors by performing operations of the Schur-complement operator 1730 and equation operations of the linear solver 1740 on the obtained elements of the matrix blocks U, W, and V and the elements of the vector r. The operations of the Schur-complement operator 1730 and the equation operations of the linear solver 1740 may correspond to the operations according to the above Equation 6. The state change ($\Delta X$) may include a state change $\Delta X_c$ for a camera pose, and a state change $\Delta X_p$ for a map point.

According to an example embodiment, the back-end processor 320 may sequentially perform Schur-complement operations based on the map point. For example, the back-end processor 320 may perform Schur-complement operations on elements of a matrix for the first map point and elements of a matrix for at least one camera pose corresponding to the first map point. The back-end processor 320 may accumulate results of performing operations on the first map point in a memory (e.g., the factor graph memory 310).

Then, the back-end processor 320 may perform Schur-complement operations on elements of a matrix for a second map point following the first map point and elements of a matrix for at least one camera pose corresponding to the second map point. The back-end processor sequentially performs Schur-complement operations based on a map point and accumulates the results in a memory to minimize the time required to load the data afterwards.

According to an example embodiment, the back-end processor 320 may obtain second data optimized from the first data based on result values accumulated in the memory. For example, the back-end processor 320 may obtain the second data, which corresponds to the first data in a new state 1750, by applying a state change ($\Delta X$) obtained through operations of the Schur-complement operator 1730 and equation operations of the linear solver 1740 to the first data. The second data ($X_2$) may refer to the state of the map point $X_{P1}$ and the state of the camera pose $X_{C1}$ of the first data ($X_1$) applied with $\Delta X_p$ and $\Delta X_c$, respectively. The second data ($X_2{}^{X_2}$) may include the state of the map point $X_{p1}$ and the state of the camera pose $X_{c1}$.

FIG. 18 is a flowchart of a method of performing optimization operations by an SLAM accelerator considering a hardware resource according to an example embodiment. FIG. 19 illustrates a Hessian matrix for performing Schur-complement operations according to an example embodiment.

Referring to FIG. 18, a method of performing optimization operations by an SLAM accelerator includes operations to be processed in the SLAM accelerator 30 of FIG. 3. According to an example embodiment, the operations may be processed time sequentially. Although some descriptions are omitted below, when such descriptions have been provided above in relation to FIGS. 1 to 17, they may be applied to the method of performing optimization operations by an SLAM accelerator illustrated in FIG. 18. Meanwhile, each operation of FIG. 18 may be performed by components included in the SLAM accelerator, for example, the factor graph memory 310 of FIG. 3, or the back-end processor 320.

In operation 1810, the SLAM accelerator may divide operations to obtain elements of a matrix for a map point and a camera pose into a plurality of sub-tracks. A track length of the plurality of sub-tracks may be determined based on the number of camera poses in which the SLAM accelerator (or the back-end processor) is able to perform operations simultaneously.

For example, when the SLAM accelerator is capable of performing operations simultaneously only for two camera poses (or frames), the length of the sub-track may be set to '2'. For example, when a particular map point (e.g., P1) is obtained in four frames corresponding to the camera poses C1 to C4, a matrix for the map point (e.g., the matrix block V of FIG. 9) and a matrix for at least one camera pose corresponding to the map point (e.g., the matrix block W of FIG. 9) may be divided based on a set sub-track length. In this case, the number of sub-tracks may be determined through the following Equation 10.

【Equation 10】

$$N_{subtrack} = N_{frame} - (subtrack\ \ length) + 1$$

According to the Equation 10, when the length of the sub-track (*subtrack length*) is '2', and the number of frames ($N_{frame}$) where certain map points are obtained is 4, the number of sub-tracks ($N_{subtrack}$) is '3'. Referring to FIG. 19, it is understood that according to the number of sub-tracks in the example (i.e., three sub-tracks), operations regarding the map point P1 may be divided into PI, 1, PI, 2, and PI, 3.

In operation 1820, the SLAM accelerator may perform operations in relation to a first sub-track, and store a first result value in the memory. The operations for the first sub-track may include optimization operations or Schur-complement operations.

According to an example embodiment illustrated in FIG. 19, the SLAM accelerator may perform Schur-complement operations in relation to elements of a matrix ($V_{1,1}$) for the first map point (PI, 1) corresponding to the first sub-track 1910, and elements of matrixes ($W_1(1)$ and $W_1(2)$) for at least one camera pose (C1 and C2) corresponding to the first map point.

The SLAM accelerator may obtain a matrix $S_{1,1}$ and a vector $b_{1,1}$ as a first result value by performing Schur-complement operations in relation to the matrix $V_{1,1}$ and matrixes $W_1(1)$ and $W_1(2)$. Here, the matrix S has a transpose structure with respect to the diagonal, and as such, the SLAM accelerator may obtain only diagonal elements and upper triangular elements of the matrix $S_{1,1}$ by performing Schur-complement operations. The SLAM accelerator may store the data of the obtained matrix $S_{1,1}$ and vector $b_{1,1}$ in the memory as the first result value.

In operation 1830, the SLAM accelerator may perform operations in relation to a second sub-track, and obtain a second result value. The operations for the second sub-track may include optimization operations or Schur-complement operations.

According to an example embodiment illustrated in FIG. 19, the SLAM accelerator may perform Schur-complement operations in relation to elements of a matrix ($V_{1,2}$) for the second map point (PI, 2) corresponding to the second sub-track 1920, and elements of matrixes ($W_1(2)$ and $W_1(3)$) for at least one camera pose (C2 and C3) corresponding to the second map point.

The SLAM accelerator may not load data of the second sub-track 1920 which overlaps with the data of the first sub-track 1910. For example, the SLAM accelerator may determine that the matrix $W_1(2)$ for the camera pose C2 corresponding to the first map point at the first sub-track 1910 overlaps with the matrix for the camera pose C2 corresponding to the second map point at the second sub-track 1920. Accordingly, the SLAM accelerator may reduce the amount of data that is loaded by loading only the matrix $W_1(3)$ for the camera pose C3 without separately loading the matrix $W_1(2)$ for the camera pose C2. As such, the SLAM accelerator may reduce a loading speed by refraining from reloading previously loaded data.

The SLAM accelerator may obtain a matrix $S_{1,2}$ and a vector $b_{1,2}$ as a second result value by performing Schur-complement operations in relation to the matrix $V_{1,2}$ and matrixes $W_1(2)$ and $W_1(3)$.

In operation 1840, the SLAM accelerator may accumulate the second result value over the first result value. For example, the SLAM accelerator may accumulate the second result value over the memory where the first result value is stored. That is, the SLAM accelerator may overwrite the first result value with the = second result value.

According to an example embodiment illustrated in FIG. 19, the SLAM accelerator may accumulate and store data obtained by Schur-complement operations in the memory in the order of output. For example, the SLAM accelerator may accumulate the second result value in the memory where the first result value is stored, and a third result value obtained in relation to a third sub-track 1930 in the memory where the first result value and the second result value are stored.

FIG. 20 is a block diagram of a Schur-complement operator according to an example embodiment.

Referring to FIG. 20, a Schur-complement operator (e.g., the Schur-complement operator 1730 of FIG. 17) may include an inverse multiplier 2010, a Q generator 2020, a W supplier 2030, a vector-scalar product array 2040, a tensor product array 2050, a vector accumulator memory 2060, and a matrix accumulator memory 2070. According to an example embodiment, the vector accumulator memory 2060 and the matrix accumulator memory 2070 may correspond to the factor graph memory 310 of FIG. 3. However, the disclosure is not limited thereto, and the vector accumulator memory 2060 and the matrix accumulator memory 2070 may correspond to a separate memory.

In one embodiment, the Schur-complement operator may compute a matrix S and a vector *b* using the following Equation 11. Equation 11 may correspond to pseudo-code for performing Schur-complement operations divided into a plurality of sub-tracks (e.g., five sub-tracks).

【Equation 11】

$$\begin{aligned}
&\text{for}(j = 0;\ j < N_{subtracked_keypoint};\ j{+}{+})\\
&\quad \text{for}(i = C_{si};\ i < C_{si} + track_length;\ i{+}{+})\\
&\qquad S(i, i+0) \mathrel{+}= W_j(i)Q_j(i-4, i)W_j(i+0)^T\\
&\qquad S(i, i+1) \mathrel{+}= W_j(i)Q_j(i-3, i)W_j(i+1)^T\\
&\qquad S(i, i+2) \mathrel{+}= W_j(i)Q_j(i-2, i)W_j(i+2)^T\\
&\qquad S(i, i+3) \mathrel{+}= W_j(i)Q_j(i-1, i)W_j(i+3)^T\\
&\qquad S(i, i+4) \mathrel{+}= W_j(i)Q_j(i-0, i)W_j(i+4)^T\\
&\qquad b(i) \mathrel{+}= W_j(i)\textstyle\sum_{k=i-4}^{i} V_j(k)^{-1} v_j(k)\\
&(Q_j(a,b) = \textstyle\sum_{k=a}^{b} V_j(k)^{-1},\ q = \sum_{k=i-4}^{i} V_j(k)^{-1} v_j(k))
\end{aligned}$$

In the above Equation 11, i represents an index element for a camera pose, and j represents an index element for a map point.

According to an example embodiment, the inverse multiplier 2010 may receive V data and r data obtained through a hessian update (e.g., the hessian update 1720 of FIG. 17). For example, the V data may refer to elements of the matrix block V for a map point in a Hessian matrix ($H(X_k)$). The r data may refer to elements of a vector corresponding to the product of the Hessian matrix ($H(X_k)$) and the state change ($\Delta X$). The r data may refer to elements of a vector corresponding to the product of the Jacobian inverse matrix ($J_e^T(X_k)$) and the error vector ($e(X_k)$). According to an example embodiment, the inverse multiplier 2010 may calculate an inverse matrix of the V data ($V^{-1}$) and the product of the inverse matrix of the V data and the r data ($V^{-1}r$).

According to an example embodiment, the Q generator 2020 may generate a vector $q$ and a matrix $Q_j(a,b)$ by receiving the inverse matrix of the V data ($V^{-1}$) and the product of the inverse matrix of the V data and the r data ($V^{-1}r$) from the inverse multiplier 2010.

According to an example embodiment, the W supplier 2030 may receive W data obtained through the hessian update. For example, the W data may refer to elements of the matrix block W for a camera pose corresponding to a map point in a Hessian matrix ($H(X_k)$).

According to an example embodiment, the vector-scalar product array 2040 may perform multiplication operations in relation to the vector $q$ and the matrix $Q_j(a,b)$ received from the Q generator 2020, and W data received from the W supplier 2030. According to an example embodiment, the tensor product array 2050 may perform tensor product operations in relation to the W data received from the W supplier 2030 and data of multiplication operations performed by the vector-scalar product array 2040. In this case, the tensor product array 2050 may perform tensor product operations in relation to the W data received from the W supplier 2030 through conversion to a transposed matrix by transposing values of rows with values of columns with respect to the diagonal elements.

According to an example embodiment, the vector-scalar product array 2040 may transmit the data of multiplication operations performed on the vector $q$ and the W data to the vector accumulator memory 2060. According to an example embodiment, the tensor product array 2050 may transmit the W data and the tensor product operation data for data obtained from multiplication operations performed by the vector-scalar product array 2040 to the matrix accumulator memory 2070.

FIG. 21 is a block diagram of a W supplier of a Schur-complement operator according to an example embodiment.

With reference to FIG. 21, the W supplier 2030 of the Schur-complement operator (e.g., the Schur-complement operator 1730 of FIG. 17) may receive as an input the ***W*** data obtained through a hessian update (e.g., the hessian update 1720 of FIG. 17).

According to an example embodiment, the W supplier 2030 may include a plurality of W registers corresponding to a plurality of divided sub-tracks. For example, when the W data is divided into five sub-tracks, the W supplier 2030 may include five W registers. In this case, the W registers may include one register including diagonal elements of the W data and four registers including off-diagonal elements of the W data.

According to an example embodiment, the W supplier 2030 may include a plurality of shift registers (W register). For example, the W supplier 2030 may move in consecutive order each register of the received W data through the shift registers. According to an example embodiment, the number of shift registers may be identical to that of the divided sub-tracks.

According to an example embodiment, the W supplier 2030 may include a timing controller (t-con) configured to transmit data processed through the plurality of shift registers to the tensor product array 2050. For example, the data processed by the plurality of shift registers may be input to the timing controller in consecutive order, and the timing controller may transmit simultaneously the plurality of pieces of input data (e.g., $W_j(i)$, $W_j(i + 1)$, $W_j(i + 2)$, $W_j(i + 3)$, and $W_j(i + 4)$) to the tensor product array 2050.

According to an example embodiment, the W supplier 2030 may transmit the data processed through the plurality of shift registers to the vector-scalar product array 2040. For example, the W supplier 2030 may transmit the data (e.g., $W_j(i)$) processed by the register including diagonal elements of the W data to the vector-scalar product array 2040.

FIG. 22 is a block diagram of a Q generator of a Schur-complement operator according to an example embodiment.

With reference to FIG. 22, the Q generator 2020 of the Schur-complement operator (e.g., the Schur-complement operator 1730 of FIG. 17) may generate a vector *q* and a matrix $Q_j(a,b)$ by receiving an inverse matrix ($V^{-1}$) of the V data and the product ($V^{-1}r$) of the inverse matrix of the V data and the r data from the inverse multiplier 2010.

According to an example embodiment, the Q generator 2020 may include a plurality of dual registers and adders corresponding to the plurality of divided sub-tracks. For example, the plurality of dual registers and adders may correspond to the shift registers. The Q generator 2020 may move in consecutive order the received inverse matrix ($V^{-1}$) of the V data and the product ($V^{-1}r$) of the inverse matrix of the V data and the r data through the plurality of dual registers and adders. In one embodiment, the number of dual registers may be identical to the number of divided sub-tracks.

According to an example embodiment, the Q generator 2020 may include a timing controller (t-con) configured to transmit data processed through the plurality of dual registers and adders to the vector-scalar product array 2040. For example, the data processed by the plurality of dual registers and adders may be input to the timing controller in consecutive order, and the timing controller may transmit simultaneously the plurality of pieces of input data (e.g., *q*, $Q_j(i - 4,i)$, $Q_j(i - 3,i)$, $Q_j(i - 2,i)$, $Q_j(i - 1,i)$, and $Q_j(i,i)$) to the vector-scalar product array 2040.

FIG. 23 is a block diagram of a vector-scalar product array of a Schur-complement operator according to an example embodiment.

With reference to FIG. 23, the vector-scalar product array 2040 may receive the ***W*** data of diagonal elements (e.g., $W_j(i)$) from the W supplier 2030, and the vector *q* and the matrix $Q_j(a,b)$ data from the Q generator 2020.

According to an example embodiment, the vector-scalar product array 2040 may perform vector-scalar product operations in relation to the **W** data, the vector *q,* and the matrix $Q_j(a,b)$ data. In such a case, the vector-scalar product array 2040 may perform multiplication operations in relation to the **W** data and the vector q data, and multiplication operations in relation to the **W** data and the matrix $Q_j(a,b)$ data simultaneously. For example, the vector-scalar product array 2040 may include a plurality of pipelined vector-scalar multipliers, and each pipelined vector-scalar multiplier may perform multiplication operations on the **W** data and the vector q data and multiplication operations on the W data and the matrix $Q_j(a,b)$ data in parallel.

According to an example embodiment, the vector-scalar product array 2040 may store results of multiplication operations on the **W** data and the vector *q* data (e.g., *Wj(i)q)* in the vector accumulator memory 2060. In one embodiment, the vector-scalar product array 2040 may transmit result values of multiplication operations on the ***W*** data and the matrix $Q_j(a,b)$ data (e.g., $W_j(i)Q_j(i - 4,i)$, $W_j(i)Q_j(i - 3,i)$, $W_j(i)Q_j(i - 2,i)$, $W_j(i)Q_j(i - 1,i)$, **and** $W_j(i)Q_j(i,i)$) to the tensor product array 2050.

FIG. 24 is a block diagram of a tensor product array of a Schur-complement operator according to an example embodiment.

With reference to FIG. 24, the tensor product array 2050 may receive the ***W*** data (e.g., $W_j(i)$, $W_j(i + 1)$, $W_j(i + 2)$, $W_j(i + 3)$, and $W_j(i + 4)$) from the W supplier 2030, and receive result values of multiplication operations on the **W** data and the matrix $Q_j(a,b)$ data (e.g., $W_j(i)Q_j(i - 4,i)$, $W_j(i)Q_j(i - 3,i)$, $W_j(i)Q_j(i - 2,i)$, $W_j(i)Q_j(i - 1,i)$, and $W_j(i)Q_j(i,i)$) from the vector-scalar product array 2040.

According to an example embodiment, the tensor product array 2050 may perform tensor product operations on the **W** data and result values of multiplication operations on the **W** data and the matrix $Q_j(a,b)$ data. In this case, the tensor product array 2050 may perform tensor product operations on the **W** data received from the W supplier 2030 and the result values of multiplication operations on the **W** data and the matrix $Q_j(a,b)$ data received from the vector-scalar product array 2040 simultaneously. For example, the tensor product array 2050 may perform tensor product operations in relation to the **W** data received from the W supplier 2030 through conversion into a transposed matrix.

The **W** data converted into a transposed matrix may include $W_j(i)^T$, $W_j(i + 1)^T$, $W_j(i + 2)^T$, $W_j(i + 3)^T$, and $W_j(i + 4)^T$.

In one embodiment, the tensor product array 2050 may store result values of tensor product operations (e.g., $W_j(i)Q_j(i - 4,i)W_j(i)^T$, $W_j(i)Q_j(i - 3,i)W_j(i + 1)^T$, $W_j(i)Q_j(i - 2,i)W_j(i + 2)^T$, $W_j(i)Q_j(i - 1,i)W_j(i + 3)^T$, and $W_j(i)Q_j(i,i)W_j(i + 4)^T$) in the matrix accumulator memory 2070. As such, the SLAM accelerator according to the disclosure may perform effective operations for a factor graph having complicated connection relations by using division of sub-tracks despite the limitation in a hardware resource. Further, the SLAM accelerator may move data in consecutive order by using shift registers, and by reusing the existing data, operations for each sub-track unit may be processed all at once. Accordingly, optimization operations may be performed with low power and high speed.

FIG. 25 is a diagram for explaining a pipeline structure of an SLAM accelerator according to an example embodiment.

FIG. 25 illustrates a process of performing operations on measurements by using a pipeline structure by the SLAM accelerator (e.g., the SLAM accelerator 30 of FIG. 3).

The SLAM accelerator may load the $N^{th}$ keypoint measurement to the $K^{th}$ cycle. The SLAM accelerator may sequentially perform operations related to the $N^{th}$ measurement over consecutive cycles (i.e., the $K+1^{th}$ cycle to $K+7^{th}$ cycle) after the $N^{th}$ measurement is loaded to the $K^{th}$ cycle. For example, the SLAM accelerator may sequentially perform data load, computation of reprojection error, generation of a Jacobian matrix (or elements of a Jacobian matrix), generation of a Hessian matrix (or elements of a Hessian matrix), Q generator, W supplier, vector-scalar product, tensor product, vector accumulation, and matrix accumulation in relation to the $N^{th}$ measurement.

Further, the SLAM accelerator may load the $N+1^{th}$ measurement to the $K+1^{th}$ cycle. The SLAM accelerator may perform operations related to the $N+1^{th}$ measurement, following the operations related to the $N^{th}$ measurement, after the $N+1^{th}$ measurement is loaded to the $K+1^{th}$ cycle. For example, the SLAM accelerator may perform data load for the $N+1^{th}$ measurement simultaneously with performing reprojection in relation to the $N^{th}$ measurement in the $K+1^{th}$ cycle. Then, the SLAM accelerator may perform reprojection for the $N+1^{th}$ measurement simultaneously with performing generation of a Jacobian matrix for the $N^{th}$ measurement in the $K+2^{th}$ cycle.

In addition to this, the SLAM accelerator may load the $N+2^{th}$ measurement in the $K+1^{th}$ cycle, and perform operations for the $N+2^{th}$ measurement, following the operations for the Nth and $N+1^{th}$ measurements. As such, the SLAM accelerator may include a pipeline structure configured to perform each of the plurality of operations for optimizing state variables, and perform operations in relation to the plurality of measurements in parallel. Accordingly, optimization operations may be performed with high speed.

According to an example embodiment, the aforementioned method of accelerating SLAM may be recorded on a computer-readable recording medium on which one or more programs including instructions to execute the method are recorded. The computer-readable recording medium may include a hardware device specifically configured to store and execute program instructions, such as magnetic media including a hard disk, a floppy disk, and a magnetic tape, optical media such as a CD-ROM and a DVD, magneto-optical media such as a floptical disk, ROM, RAM, flash memory, etc. The program instructions may include not only machine language code, which is made by a compiler, but high level language code executable by a computer by using an interpreter, etc.

It should be understood that example embodiments described herein should be considered in a descriptive sense only and not for purposes of limitation. Descriptions of features or aspects within each example embodiment should typically be considered as available for other similar features or aspects in other embodiments. While one or more example embodiments have been described with reference to the figures, it will be understood by those of ordinary skill in the art that various changes in form and details may be made therein without departing from the scope as defined by the following claims.

## Claims

**1.** An apparatus for accelerating simultaneous localization and mapping (SLAM) comprising:

a memory; and
a processor configured to:

obtain a first measurement, among a plurality of measurements, for a map point and a camera pose from the memory,
determine, based on the first measurement, one or more elements corresponding to an optimization matrix, among a plurality of elements of a Hessian matrix, without generating an entirety of the Hessian matrix for the map point and the camera pose based on all of the plurality of measurements, and
accumulate the determined one or more elements over the optimization matrix used to perform optimization operations corresponding to the map point and the camera pose.

**2.** The apparatus of claim 1,

wherein the processor comprises a pipeline structure configured to sequentially perform first operations related to the first measurement over consecutive cycles after the first measurement is loaded in a first cycle, and

wherein the pipeline structure is configured to perform second operations related to a second measurement, following the first operations regarding the first measurement after the second measurement is loaded in a second cycle which follows the first cycle.

**3.** The apparatus of claim 1 or 2,
wherein the processor is further configured to determine the one or more elements corresponding to the optimization matrix by computing first elements of a first matrix block for the camera pose, second elements of a second matrix block for the map point, and third elements of a third matrix block for at least one camera pose corresponding to the map point based on the first measurement.

**4.** The apparatus of any preceding claim,
wherein the first measurement includes a first map point and at least one first camera pose corresponding to the first map point.

**5.** The apparatus of any preceding claim,
wherein the processor is further configured to perform optimization operations corresponding to states of the map point and the camera pose by using the optimization matrix based on elements sequentially determined for all measurements being accumulated over the optimization matrix.

**6.** The apparatus of any preceding claim,
wherein the first measurement corresponds to a result of performing front-end operations for data obtained from a sensor including at least one of a camera, an inertial measurement unit (IMU), a depth sensor, a global positioning system (GPS), or an odometer.

**7.** The apparatus of claim 6,
wherein, based on the first measurement corresponding to the result of performing the front-end operations for the data obtained from the camera and the IMU, the processor is further on configured to divide the first measurement into a first part corresponding to both of the camera and the IMU, and a second part corresponding only by the IMU.

**8.** The apparatus of claim 7,
wherein the processor is further configured to:

based on the first part:

determine first elements of a first matrix block for the camera pose,
determine second elements of a second matrix block for the map point,
determine third elements of a third matrix block for at least one camera pose corresponding to the map point, by using the first part,
accumulate the first elements, the second elements and the third elements over the optimization matrix, and

based on the second part:

determine fourth elements of a fourth matrix block for the camera pose, and accumulate the fourth elements over the optimization matrix.

**9.** The apparatus of any preceding claim,
wherein the processor is further configured to divide operations to determine the one or more elements into a plurality of sub-tracks.

**10.** The apparatus of claim 9,
wherein a track length of the plurality of sub-tracks is set based on a number of camera poses in which the processor is able to perform operations simultaneously.

**11.** A method of accelerating simultaneous localization and mapping (SLAM), the method comprising:

obtaining a first measurement, among a plurality of measurements, for a map point and a camera pose from a memory,
determining, based on the first measurement, one or more elements corresponding to an optimization matrix, among a plurality of elements of a Hessian matrix, without generating an entire the Hessian matrix for the map point and the camera pose based on all of the plurality of measurements, and
accumulating the determined one or more elements over the optimization matrix used to perform optimization operations corresponding to the map point and the camera pose.

**12.** The method of claim 11, further comprising:

sequentially performing first operations related to the first measurement over consecutive cycles after the first measurement is loaded in a first cycle; and
performing second operations related to a second measurement, following the first operations regarding the first measurement, after the second measurement is loaded in a second cycle which follows the first cycle.

**13.** The method of claim 11 or 12,
wherein the determining of the one or more elements corresponding to the optimization matrix in connection with the first measurement comprises determining first elements of a first matrix block for the camera pose, second elements of a second matrix block for the map point, and third elements of a third matrix block for at least one camera pose corresponding to the map point based on the first measurement.

**14.** The method of claim 11, 12 or 13,
wherein the first measurement includes a first map point and at least one first camera pose corresponding to the first map point.

**15.** A computer-readable recording medium on which a program for executing the method of claim 11 in a computer is recorded.

FIG. 1

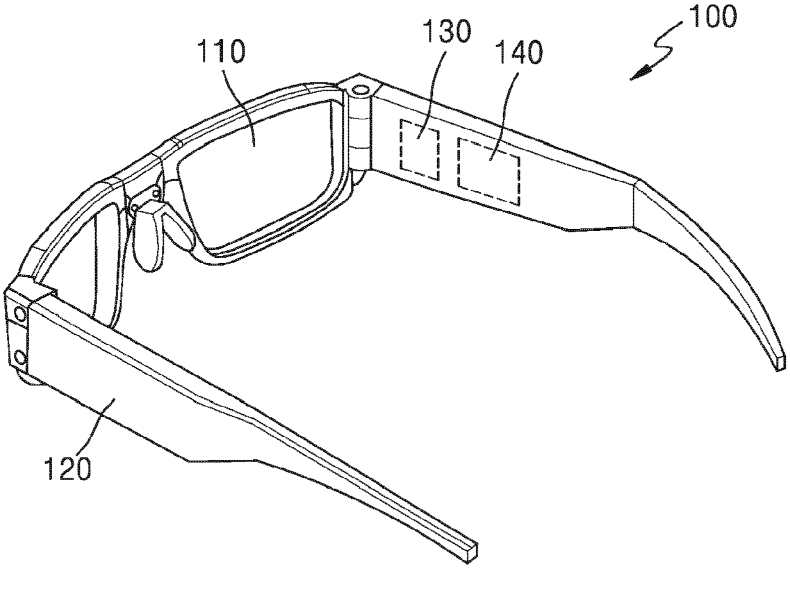

FIG. 2

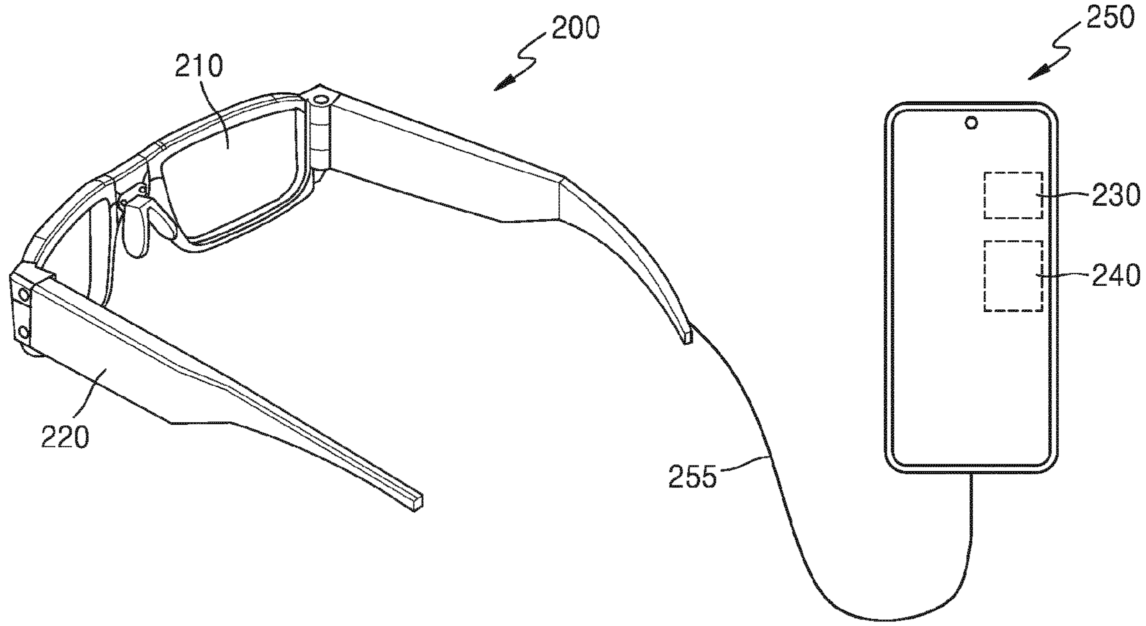

FIG. 3

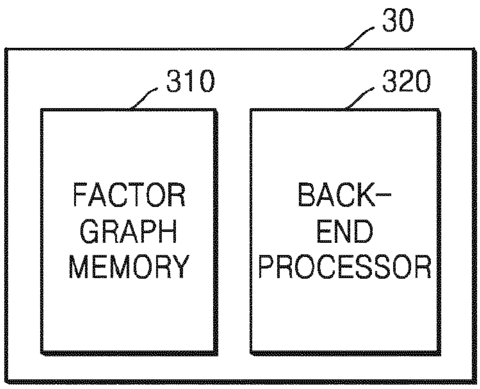

FIG. 4

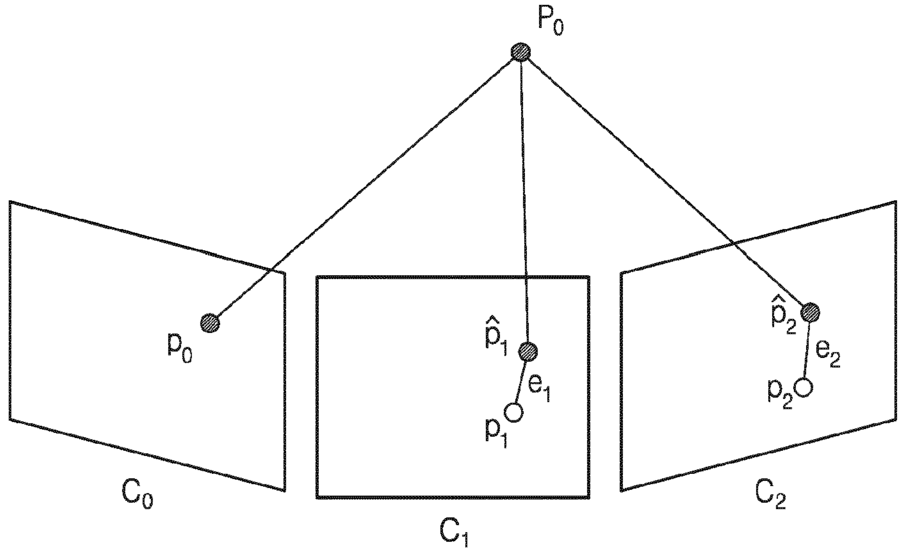

FIG. 5

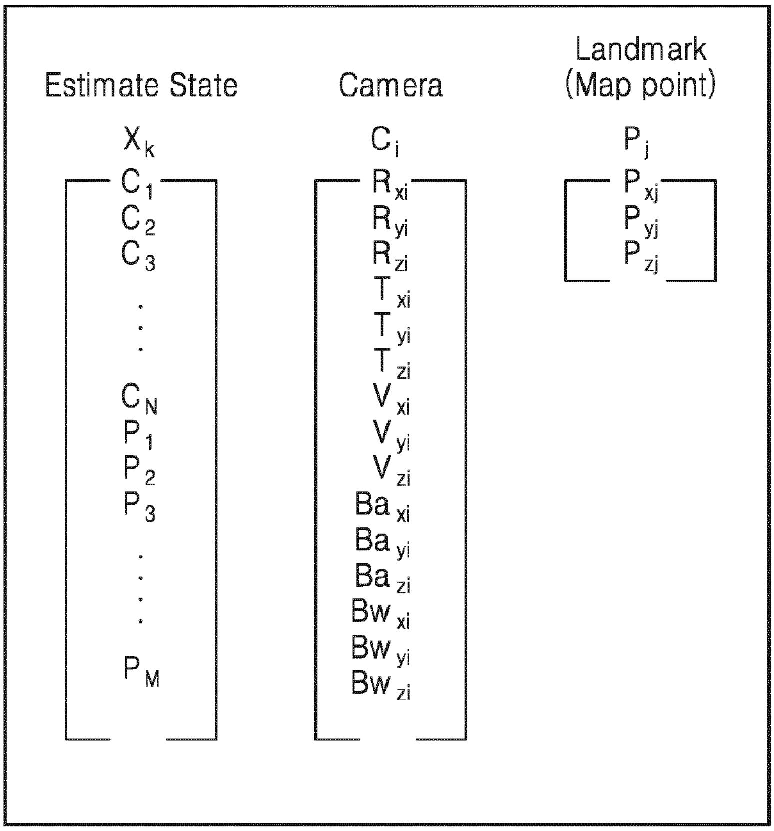
Estimate State
Camera
Landmark
(Map point)
$X_k$
$C_i$
$P_j$
$C_1$
$C_2$
$C_3$
$C_N$
$P_1$
$P_2$
$P_3$
$P_M$
$R_{xi}$
$R_{yi}$
$R_{zi}$
$T_{xi}$
$T_{yi}$
$T_{zi}$
$V_{xi}$
$V_{yi}$
$V_{zi}$
$Ba_{xi}$
$Ba_{yi}$
$Ba_{zi}$
$Bw_{xi}$
$Bw_{yi}$
$Bw_{zi}$
$P_{xj}$
$P_{yj}$
$P_{zj}$

FIG. 6

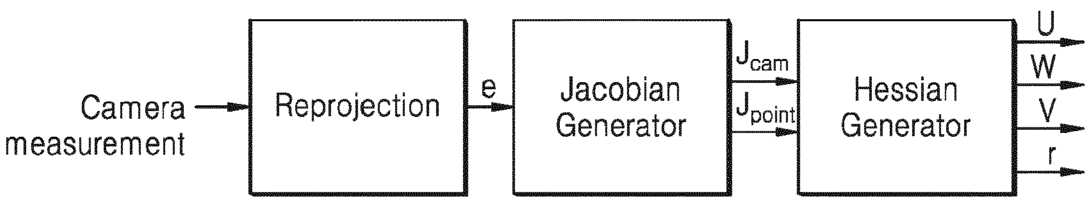
Camera measurement
Reprojection
e
Jacobian Generator
$J_{cam}$
$J_{point}$
Hessian Generator
U
W
V
r

FIG. 7

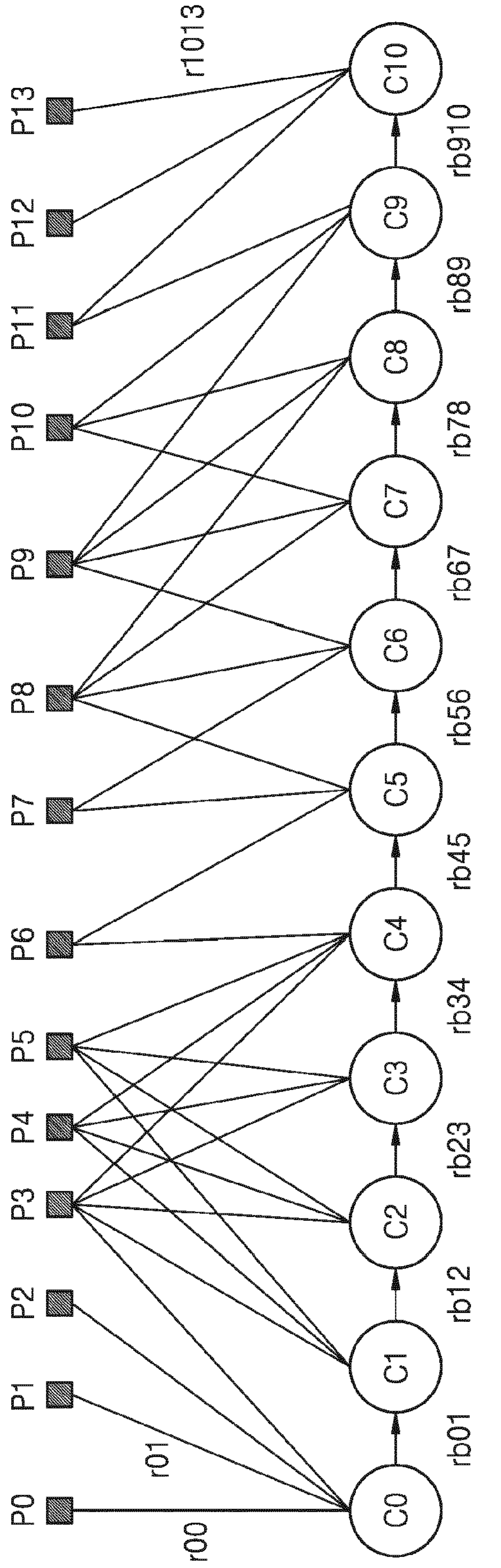
P0
P1
P2
P3
P4
P5
P6
P7
P8
P9
P10
P11
P12
P13
r00
r01
r1013
C0
C1
C2
C3
C4
C5
C6
C7
C8
C9
C10
rb01
rb12
rb23
rb34
rb45
rb56
rb67
rb78
rb89
rb910

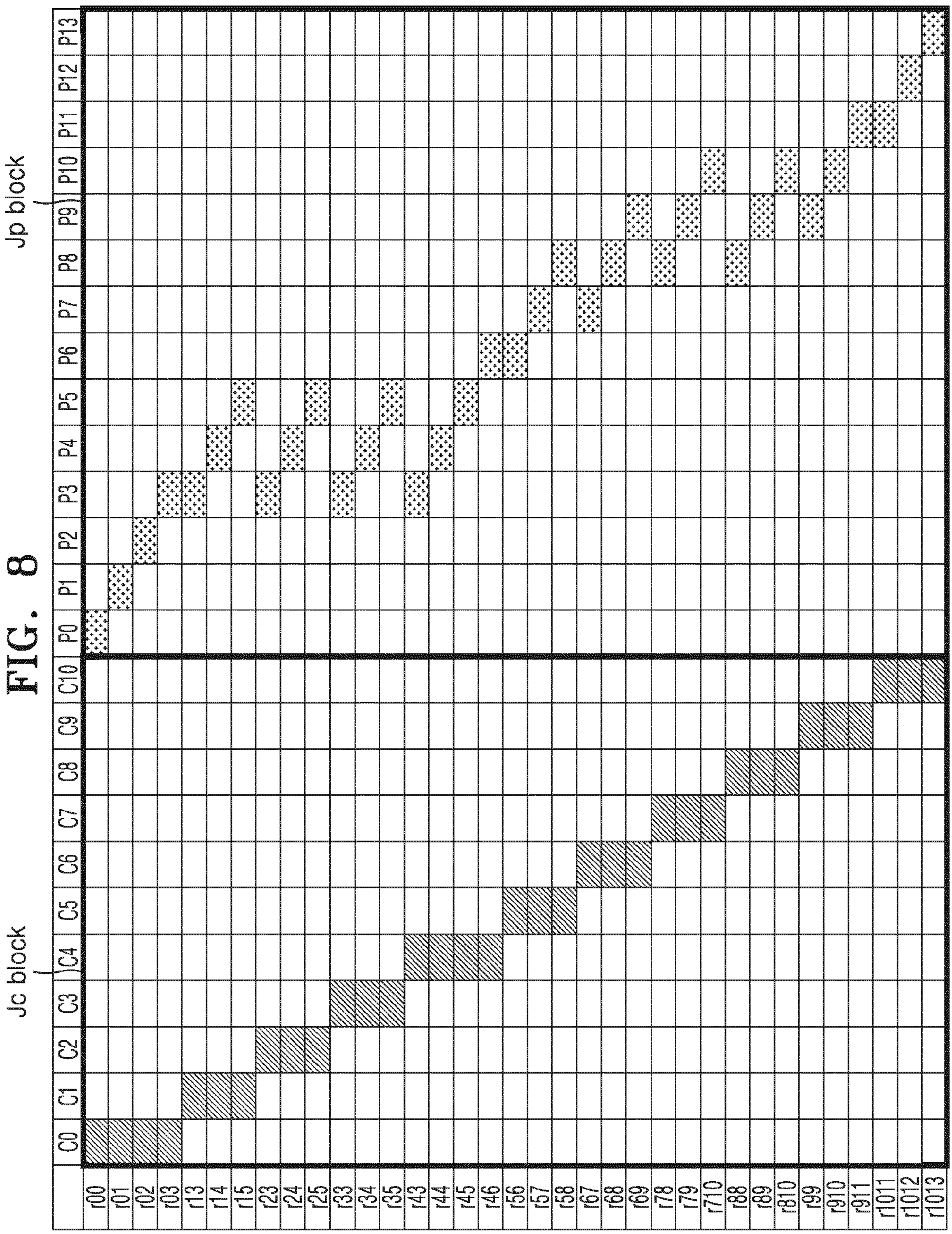
Jc block
Jp block
C0
C1
C2
C3
C4
C5
C6
C7
C8
C9
C10
P0
P1
P2
P3
P4
P5
P6
P7
P8
P9
P10
P11
P12
P13
r00
r01
r02
r03
r13
r14
r15
r23
r24
r25
r33
r34
r35
r43
r44
r45
r46
r56
r57
r58
r67
r68
r69
r78
r79
r710
r88
r89
r810
r99
r910
r911
r1011
r1012
r1013

FIG. 8

FIG. 9

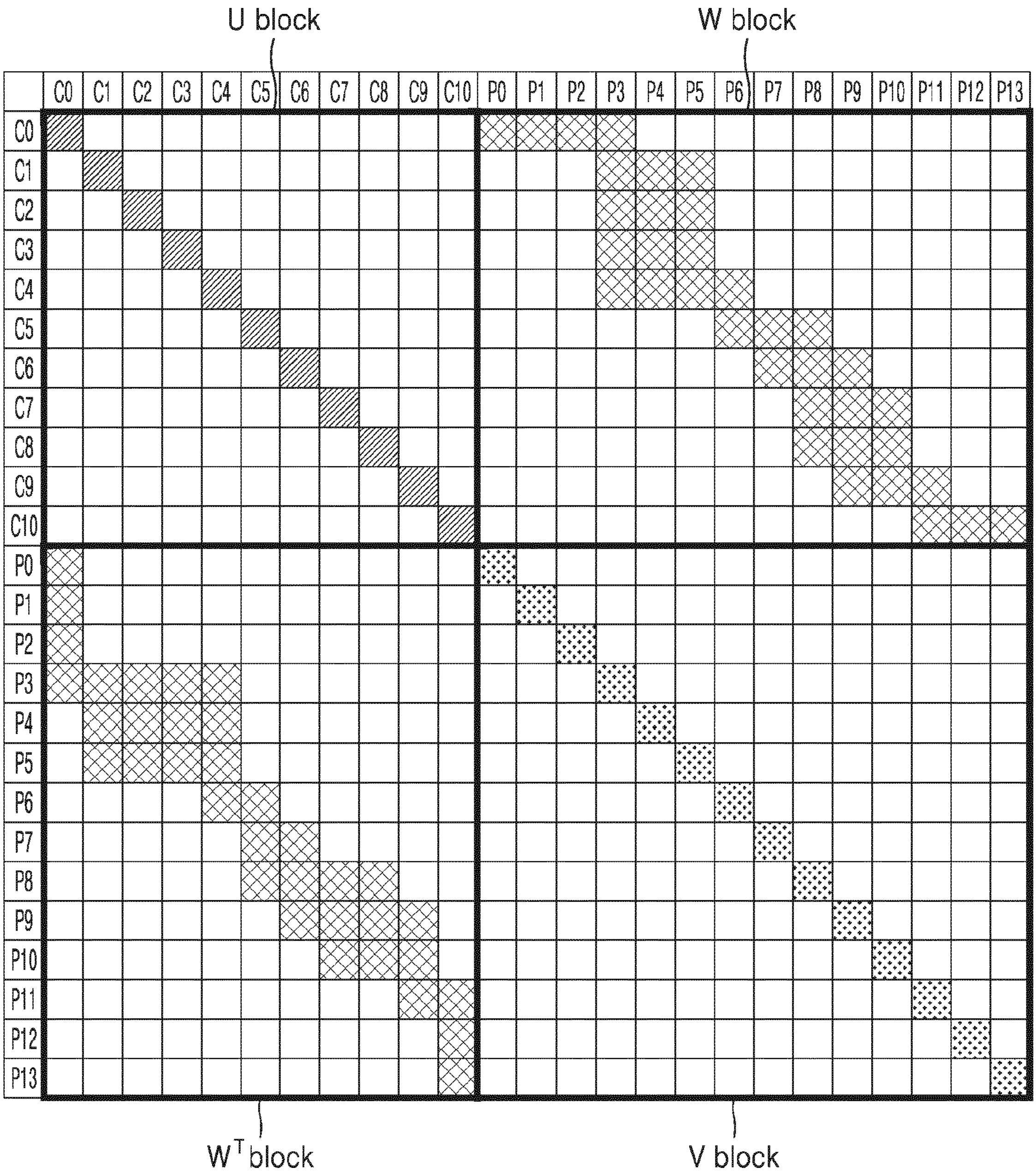
U block
W block
C0 C1 C2 C3 C4 C5 C6 C7 C8 C9 C10 P0 P1 P2 P3 P4 P5 P6 P7 P8 P9 P10 P11 P12 P13
C0 C1 C2 C3 C4 C5 C6 C7 C8 C9 C10 P0 P1 P2 P3 P4 P5 P6 P7 P8 P9 P10 P11 P12 P13
W^T block
V block

FIG. 10

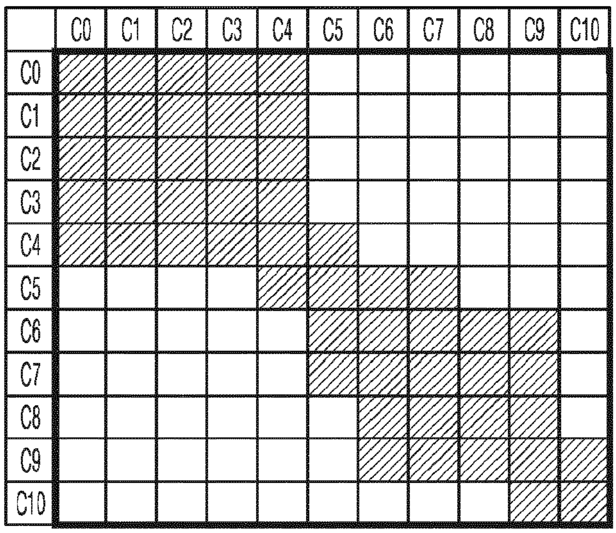

FIG. 11

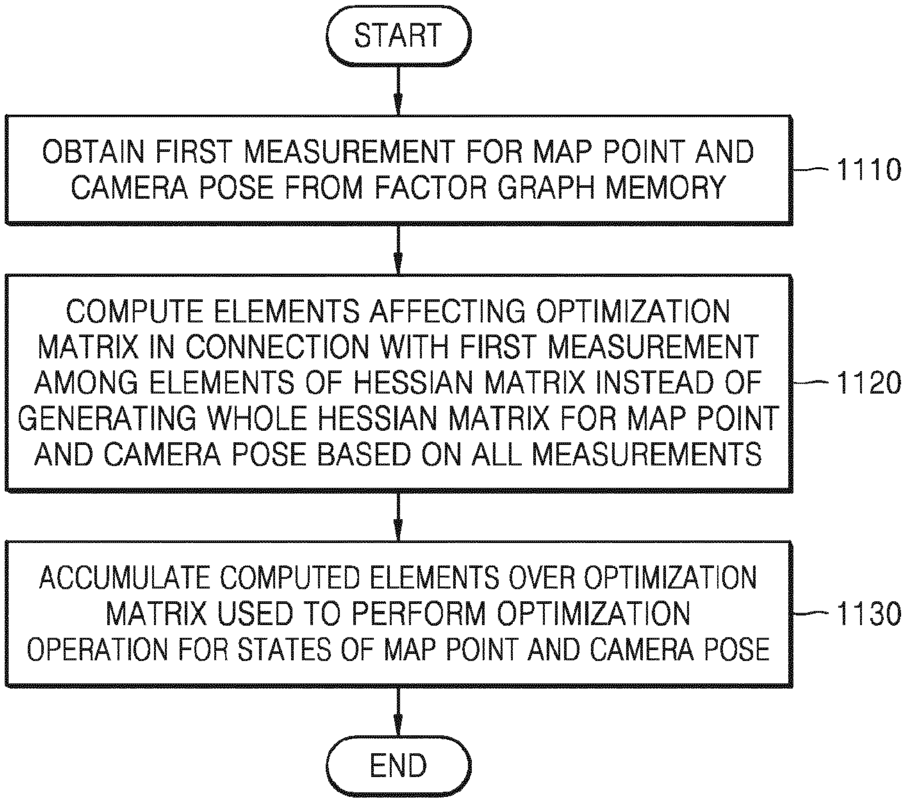
START
OBTAIN FIRST MEASUREMENT FOR MAP POINT AND CAMERA POSE FROM FACTOR GRAPH MEMORY
1110
COMPUTE ELEMENTS AFFECTING OPTIMIZATION MATRIX IN CONNECTION WITH FIRST MEASUREMENT AMONG ELEMENTS OF HESSIAN MATRIX INSTEAD OF GENERATING WHOLE HESSIAN MATRIX FOR MAP POINT AND CAMERA POSE BASED ON ALL MEASUREMENTS
1120
ACCUMULATE COMPUTED ELEMENTS OVER OPTIMIZATION MATRIX USED TO PERFORM OPTIMIZATION OPERATION FOR STATES OF MAP POINT AND CAMERA POSE
1130
END

FIG. 12

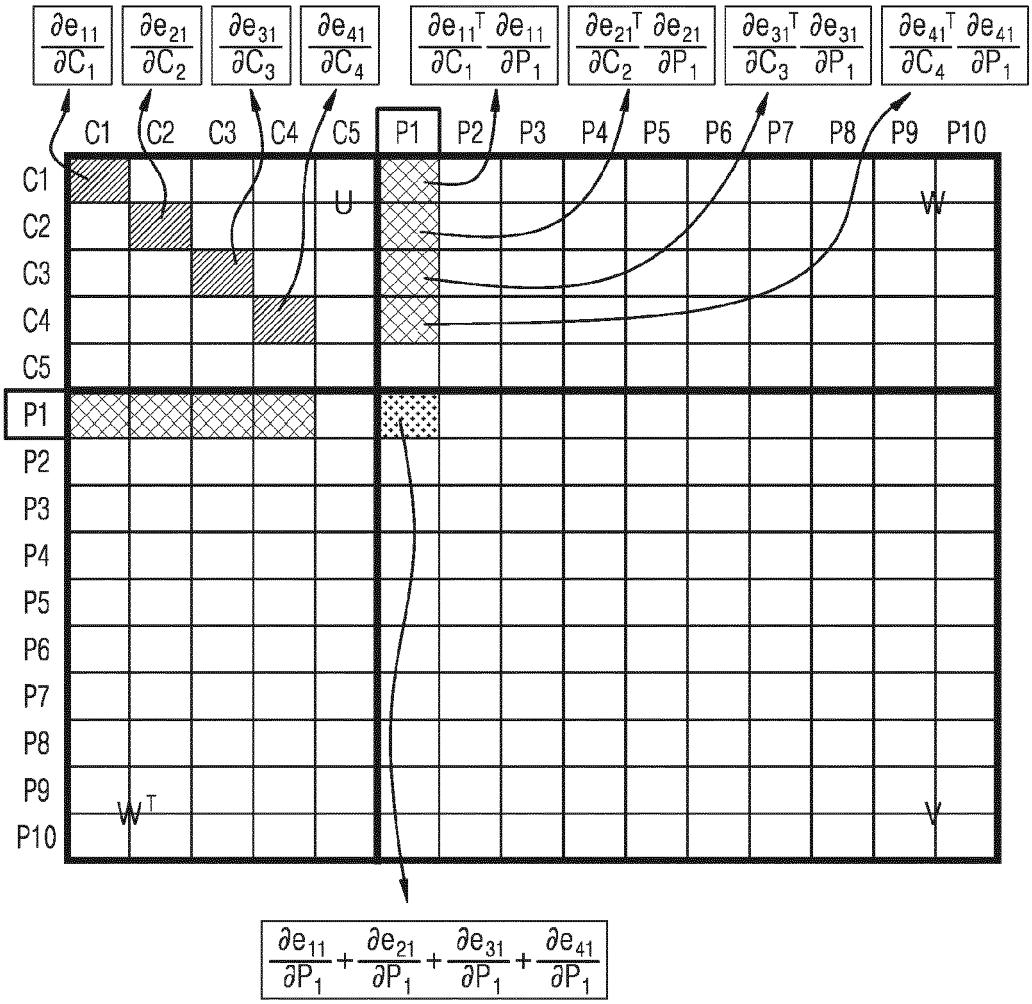
$\frac{\partial e_{11}}{\partial C_1}$
$\frac{\partial e_{21}}{\partial C_2}$
$\frac{\partial e_{31}}{\partial C_3}$
$\frac{\partial e_{41}}{\partial C_4}$
$\frac{\partial e_{11}}{\partial C_1}^T \frac{\partial e_{11}}{\partial P_1}$
$\frac{\partial e_{21}}{\partial C_2}^T \frac{\partial e_{21}}{\partial P_1}$
$\frac{\partial e_{31}}{\partial C_3}^T \frac{\partial e_{31}}{\partial P_1}$
$\frac{\partial e_{41}}{\partial C_4}^T \frac{\partial e_{41}}{\partial P_1}$
C1 C2 C3 C4 C5 P1 P2 P3 P4 P5 P6 P7 P8 P9 P10
C1 C2 C3 C4 C5 P1 P2 P3 P4 P5 P6 P7 P8 P9 P10
U
W
$W^T$
V
$\frac{\partial e_{11}}{\partial P_1} + \frac{\partial e_{21}}{\partial P_1} + \frac{\partial e_{31}}{\partial P_1} + \frac{\partial e_{41}}{\partial P_1}$

FIG. 13

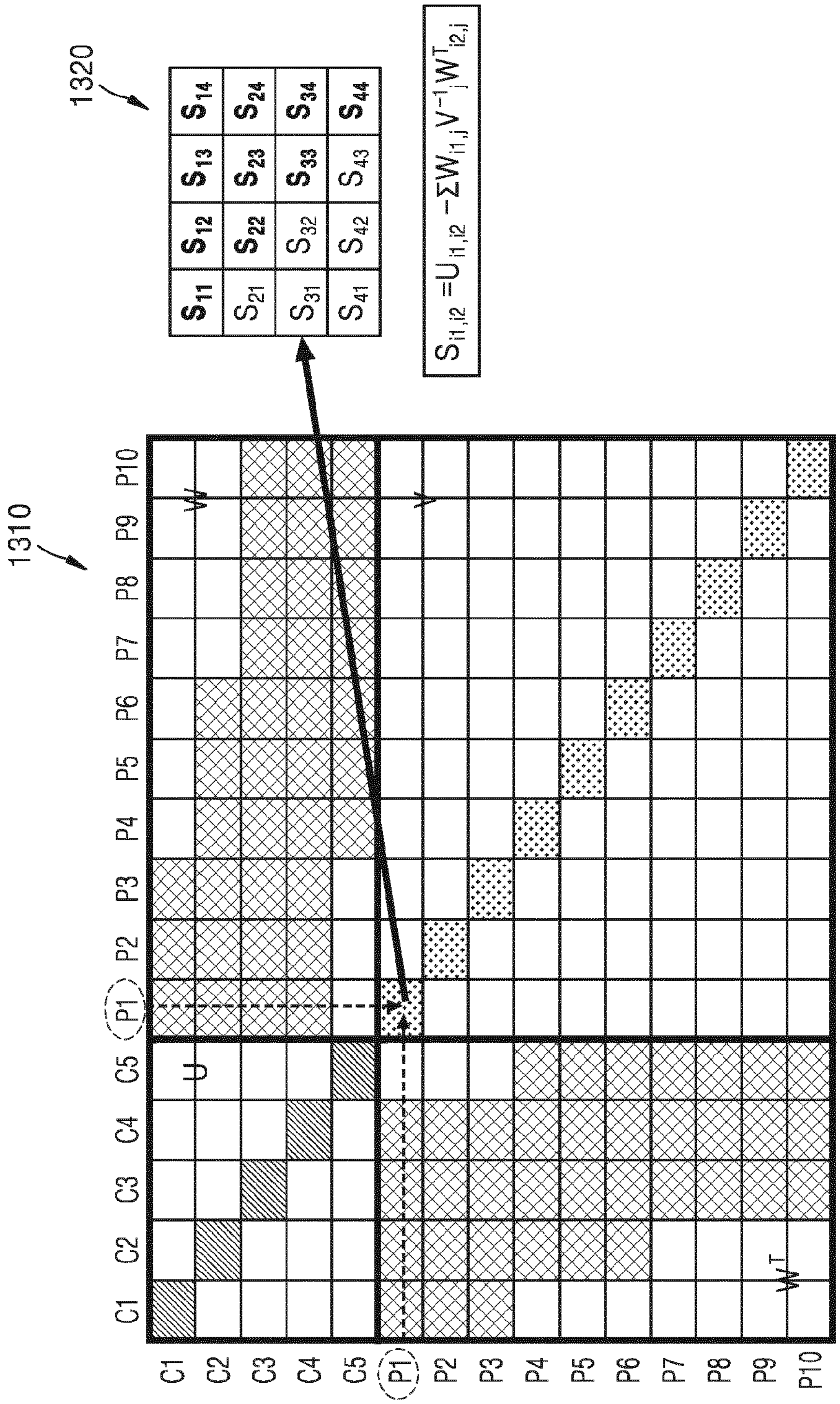
1310
1320
S11 S12 S13 S14
S21 S22 S23 S24
S31 S32 S33 S34
S41 S42 S43 S44
$S_{i1,i2} = U_{i1,i2} - \Sigma W_{i1,j} V^{-1}_{j} W^{T}_{i2,j}$
C1 C2 C3 C4 C5 P1 P2 P3 P4 P5 P6 P7 P8 P9 P10
U
W
V
$W^T$

FIG. 14

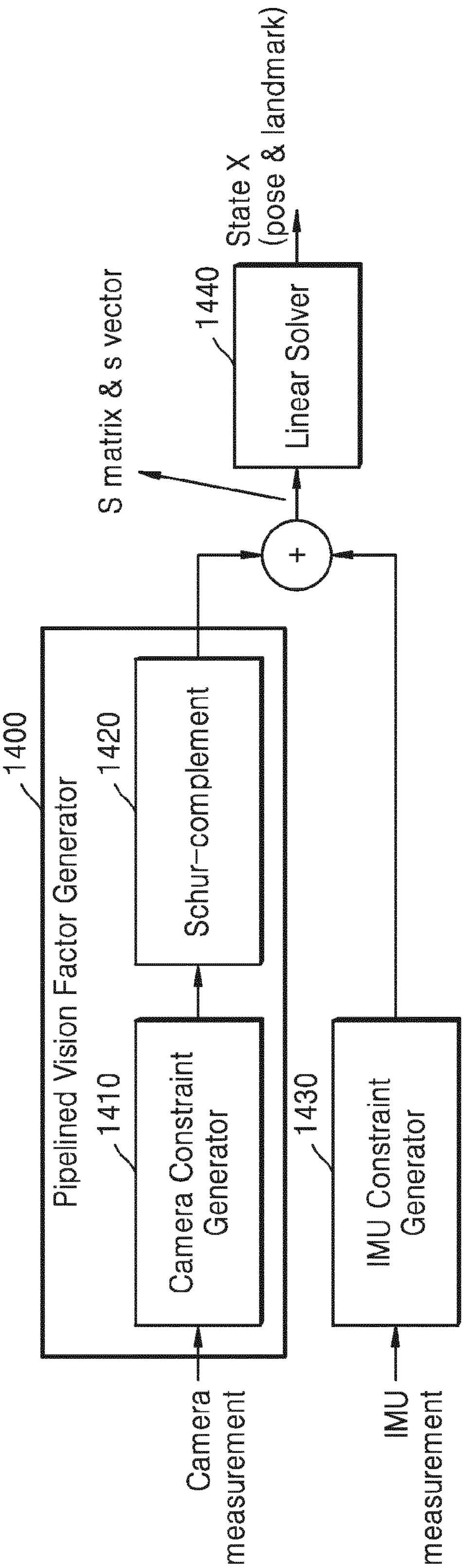

State X
(pose & landmark)
S matrix & s vector
1440
Linear Solver
+
1400
Pipelined Vision Factor Generator
1420
Schur-complement
1410
Camera Constraint
Generator
1430
IMU Constraint
Generator
Camera
measurement
IMU
measurement

# FIG. 15

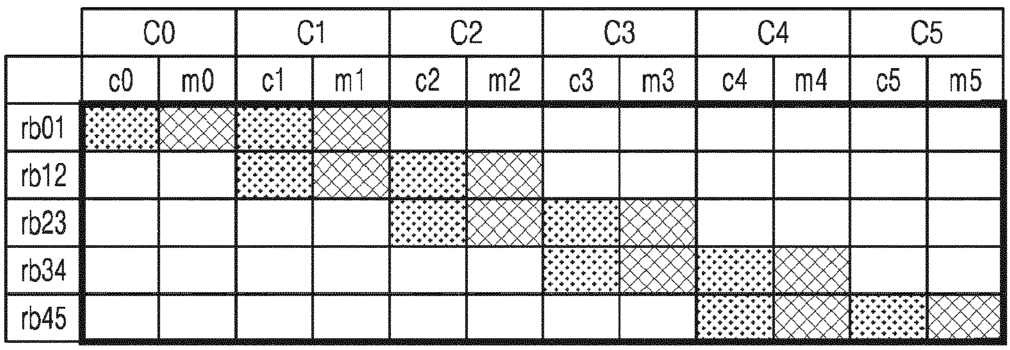
C0
C1
C2
C3
C4
C5
c0
m0
c1
m1
c2
m2
c3
m3
c4
m4
c5
m5
rb01
rb12
rb23
rb34
rb45

# FIG. 16

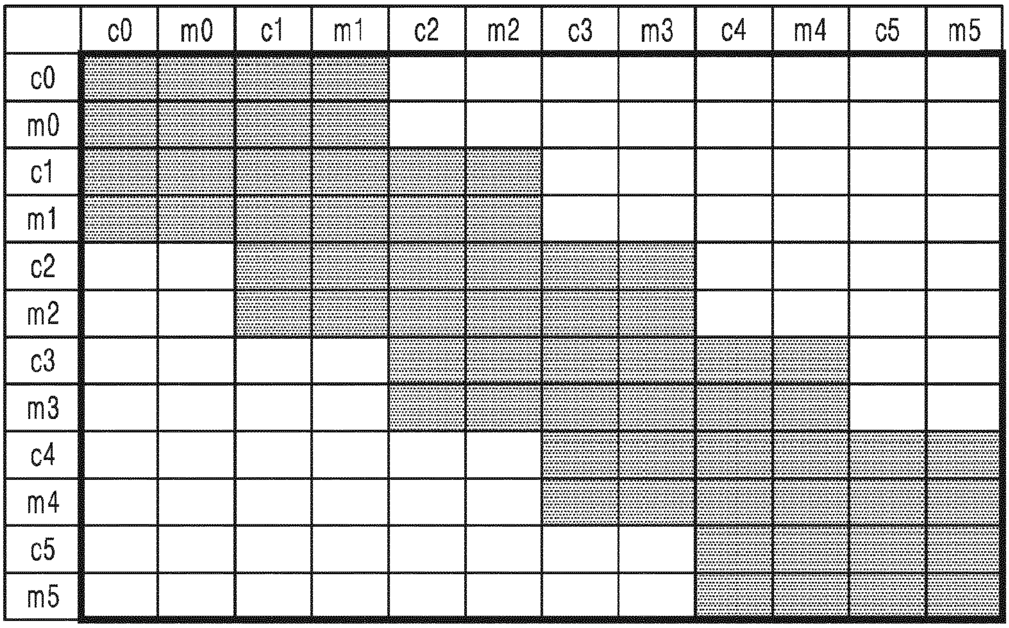

FIG. 17

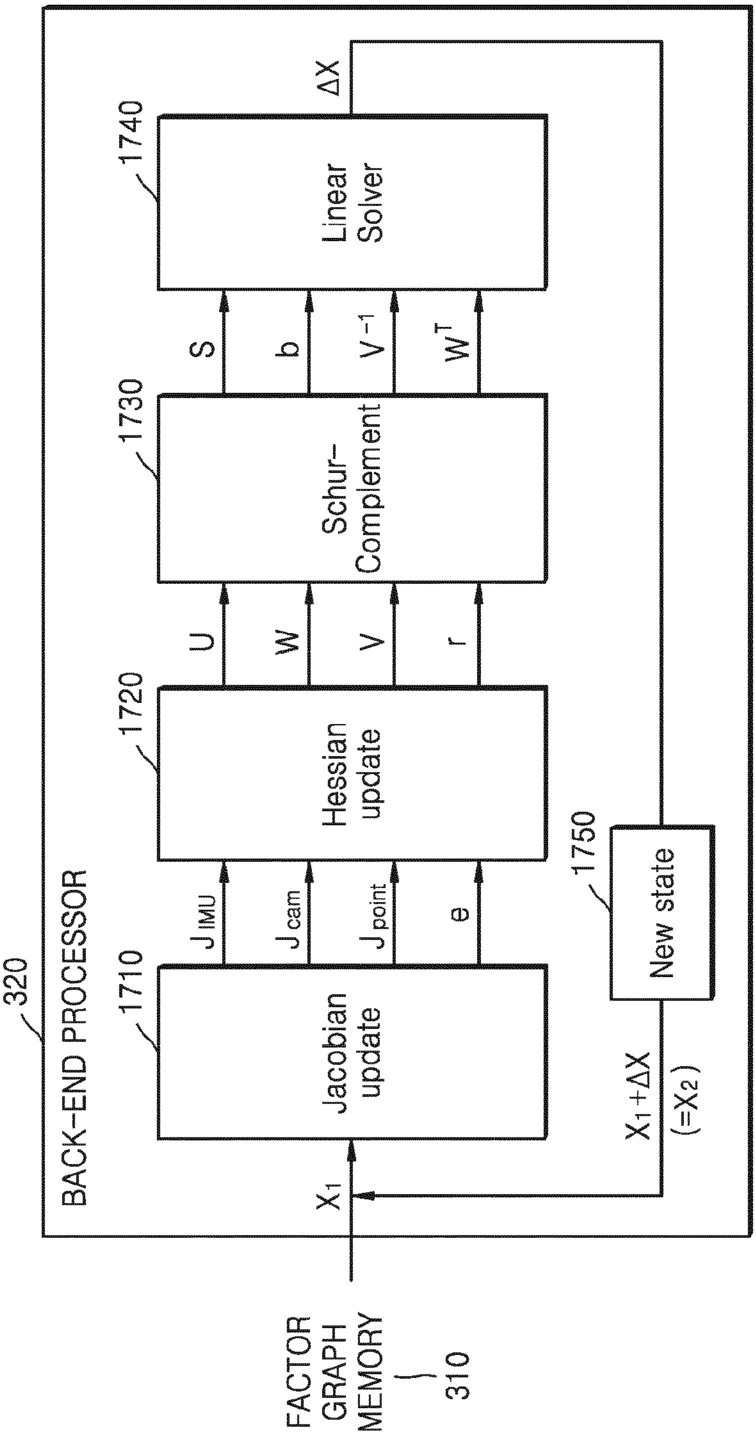
320
BACK-END PROCESSOR
1710
Jacobian update
1720
Hessian update
1730
Schur-Complement
1740
Linear Solver
1750
New state
J IMU
J cam
J point
e
U
W
V
r
S
b
V⁻¹
Wᵀ
ΔX
X₁
X₁ +ΔX
(=X₂)
FACTOR GRAPH MEMORY
310

FIG. 18

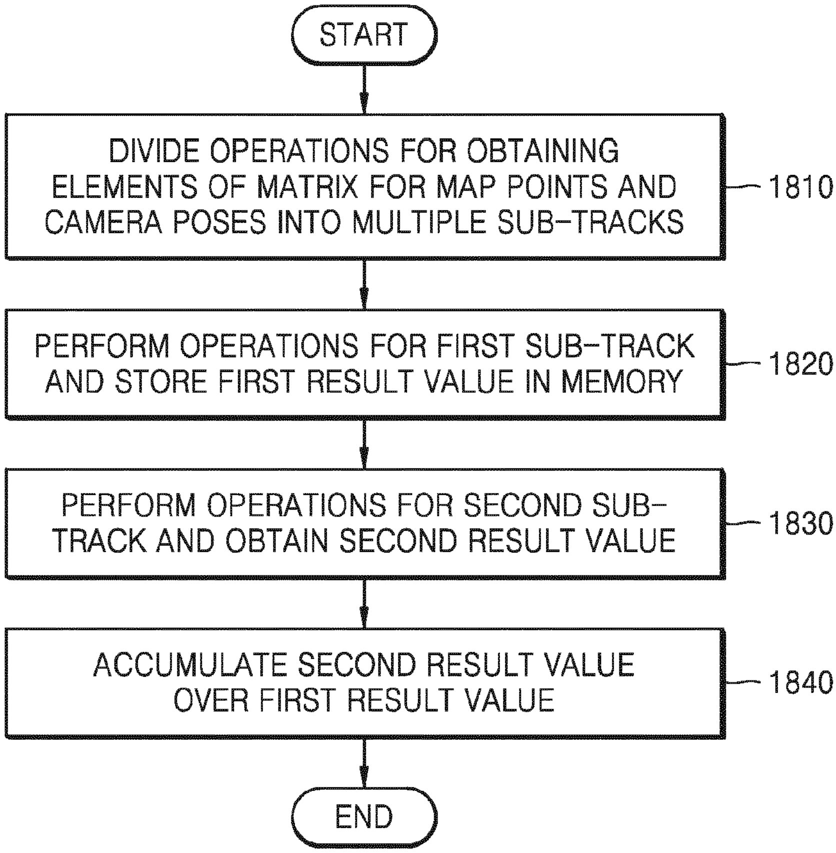
START
DIVIDE OPERATIONS FOR OBTAINING ELEMENTS OF MATRIX FOR MAP POINTS AND CAMERA POSES INTO MULTIPLE SUB-TRACKS
1810
PERFORM OPERATIONS FOR FIRST SUB-TRACK AND STORE FIRST RESULT VALUE IN MEMORY
1820
PERFORM OPERATIONS FOR SECOND SUB-TRACK AND OBTAIN SECOND RESULT VALUE
1830
ACCUMULATE SECOND RESULT VALUE OVER FIRST RESULT VALUE
1840
END

FIG. 19

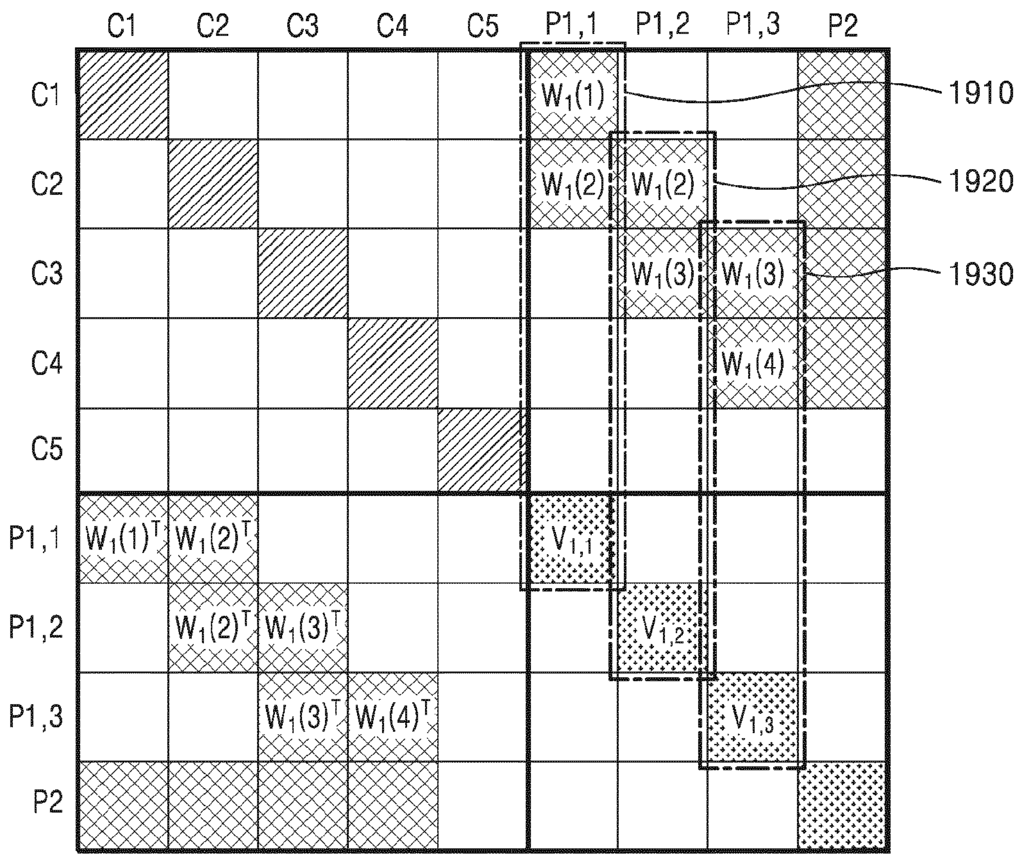

C1
C2
C3
C4
C5
P1,1
P1,2
P1,3
P2
$W_1(1)$
$W_1(2)$
$W_1(3)$
$W_1(4)$
$W_1(1)^T$
$W_1(2)^T$
$W_1(3)^T$
$W_1(4)^T$
$V_{1,1}$
$V_{1,2}$
$V_{1,3}$
1910
1920
1930

FIG. 20

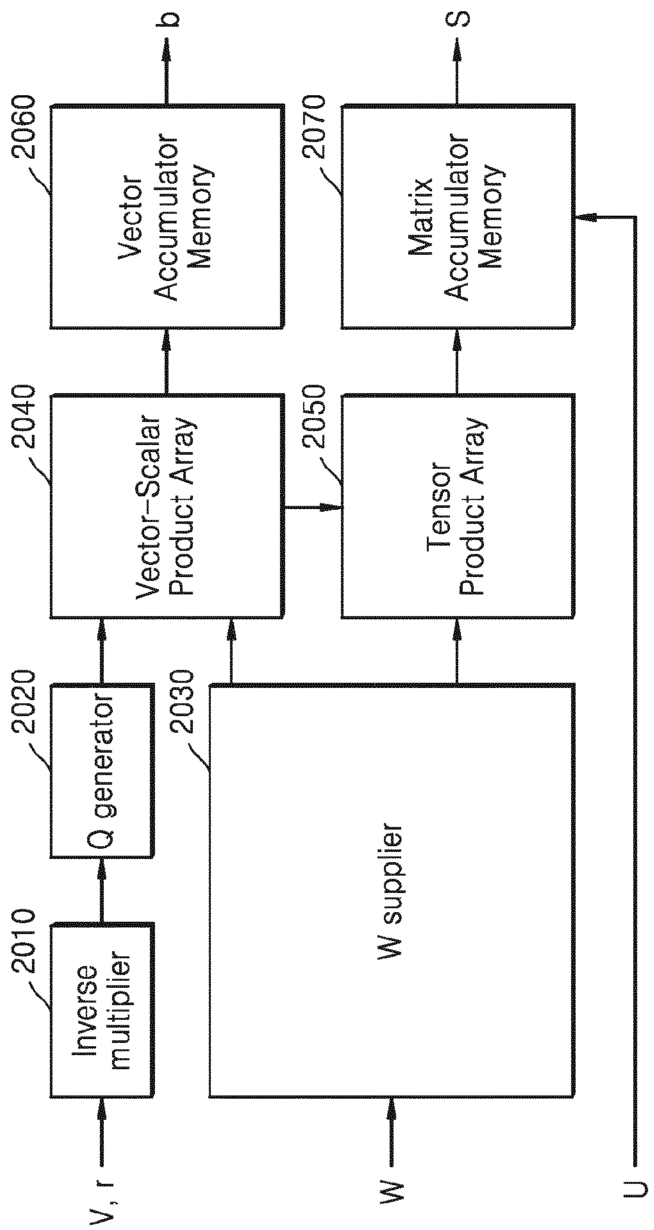
V, r
W
U
2010
Inverse multiplier
2020
Q generator
2030
W supplier
2040
Vector-Scalar Product Array
2050
Tensor Product Array
2060
Vector Accumulator Memory
2070
Matrix Accumulator Memory
b
S

FIG. 21

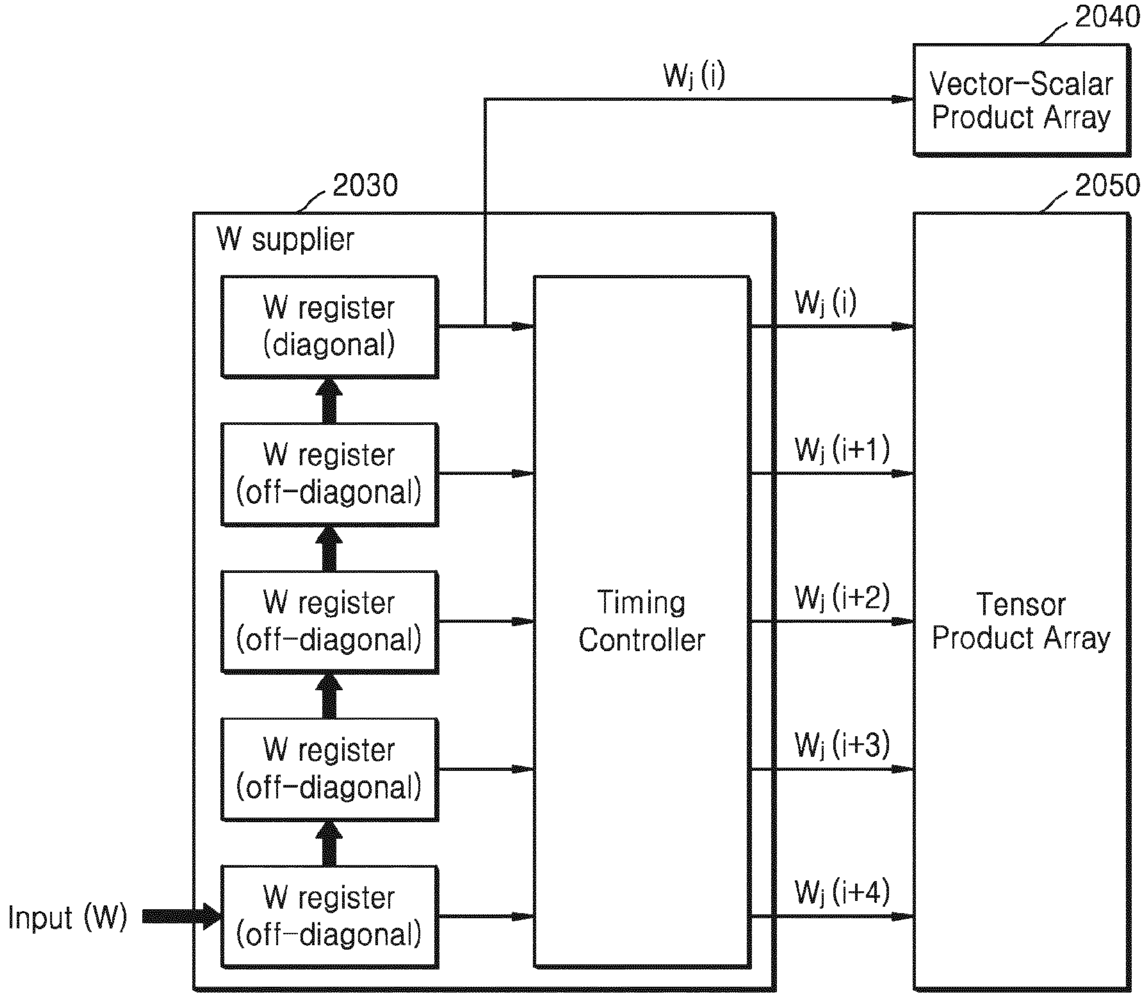
2040
Vector-Scalar Product Array
$W_j$ (i)
2030
W supplier
W register (diagonal)
W register (off-diagonal)
W register (off-diagonal)
W register (off-diagonal)
W register (off-diagonal)
Input (W)
Timing Controller
2050
$W_j$ (i)
$W_j$ (i+1)
$W_j$ (i+2)
$W_j$ (i+3)
$W_j$ (i+4)
Tensor Product Array

FIG. 22

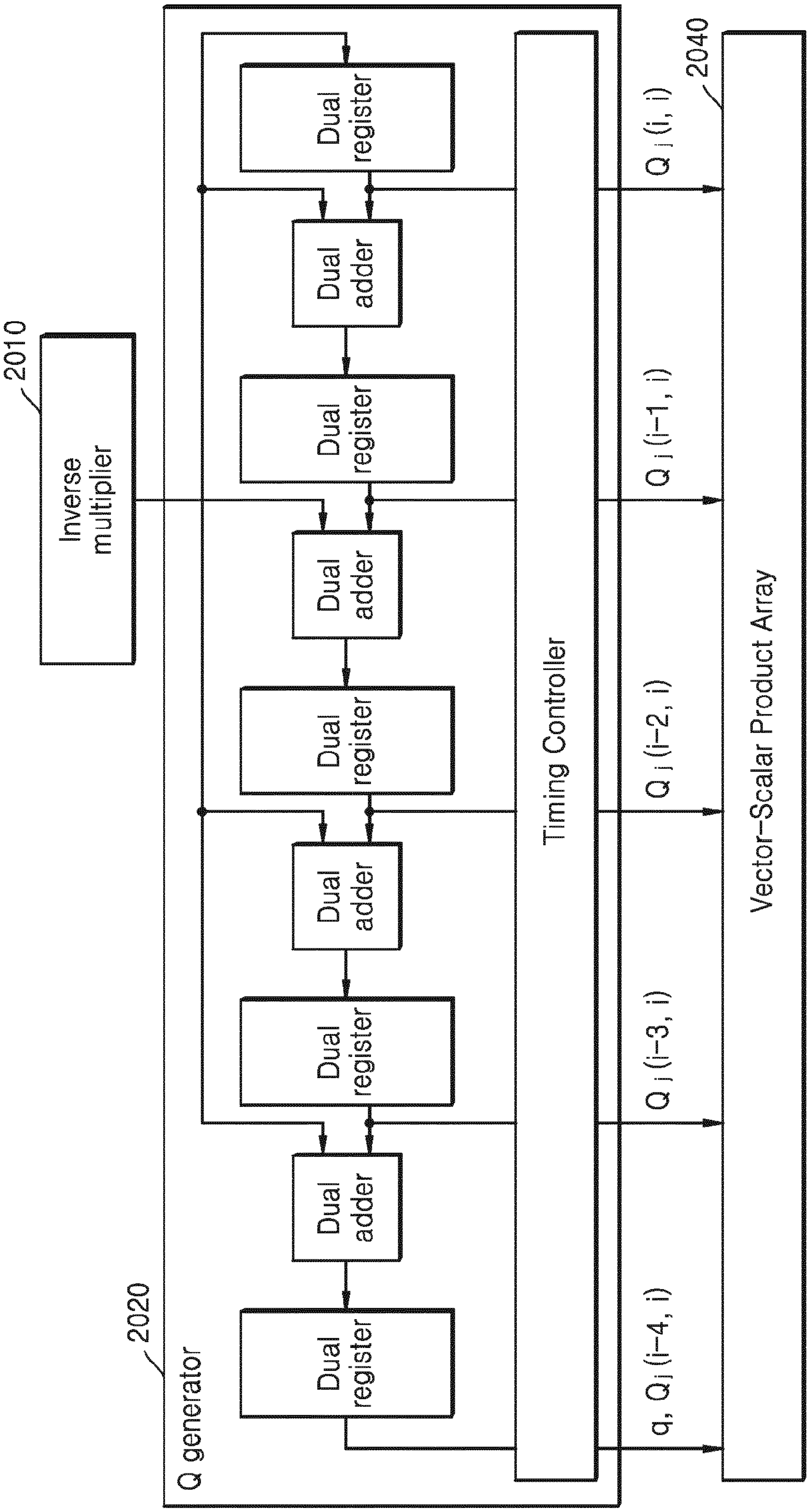
2010
Inverse multiplier
2020
Q generator
Dual register
Dual adder
Dual register
Dual adder
Dual register
Dual adder
Dual register
Dual adder
Dual register
Timing Controller
Q j (i, i)
Q j (i−1, i)
Q j (i−2, i)
Q j (i−3, i)
q, Qj (i−4, i)
2040
Vector−Scalar Product Array

FIG. 23

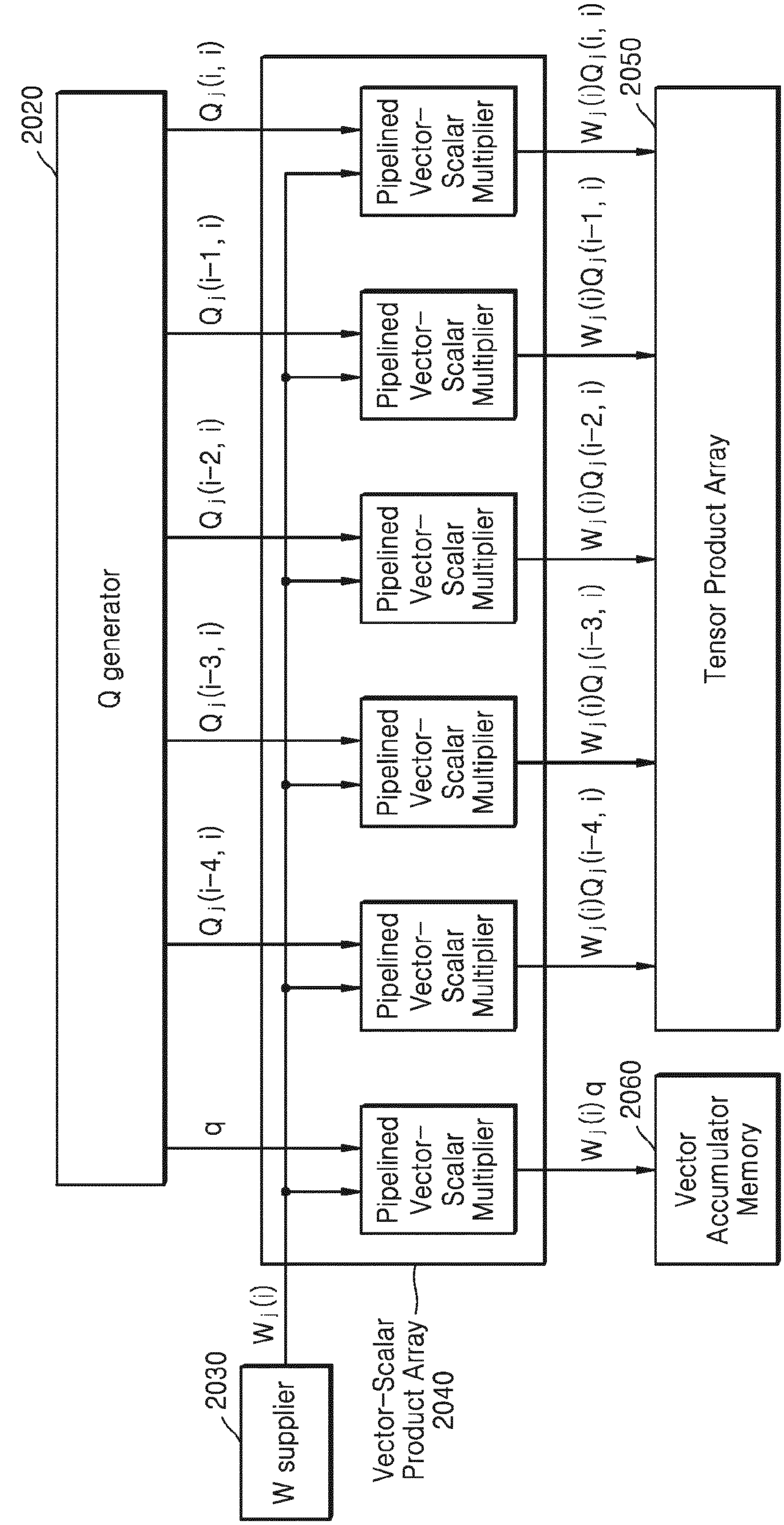

2020
Q generator
$Q_j(i, i)$
$Q_j(i-1, i)$
$Q_j(i-2, i)$
$Q_j(i-3, i)$
$Q_j(i-4, i)$
q
Pipelined Vector-Scalar Multiplier
Pipelined Vector-Scalar Multiplier
Pipelined Vector-Scalar Multiplier
Pipelined Vector-Scalar Multiplier
Pipelined Vector-Scalar Multiplier
Pipelined Vector-Scalar Multiplier
$W_j(i)Q_j(i, i)$
$W_j(i)Q_j(i-1, i)$
$W_j(i)Q_j(i-2, i)$
$W_j(i)Q_j(i-3, i)$
$W_j(i)Q_j(i-4, i)$
$W_j(i)q$
2050
Tensor Product Array
2060
Vector Accumulator Memory
$W_j(i)$
2030
W supplier
Vector-Scalar Product Array 2040

FIG. 24

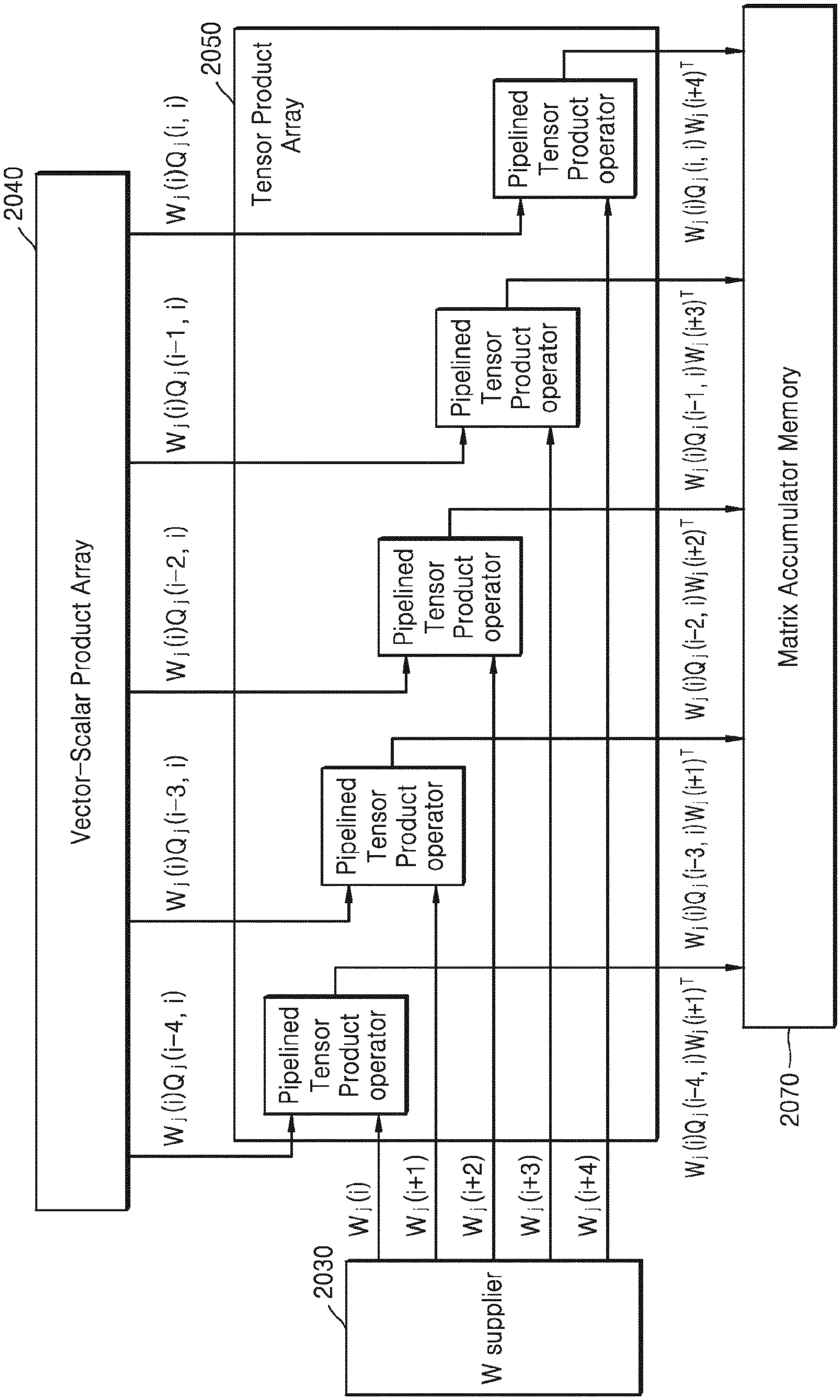
2040
Vector-Scalar Product Array
2050
Tensor Product Array
$W_j(i)Q_j(i-4, i)$
$W_j(i)Q_j(i-3, i)$
$W_j(i)Q_j(i-2, i)$
$W_j(i)Q_j(i-1, i)$
$W_j(i)Q_j(i, i)$
Pipelined Tensor Product operator
Pipelined Tensor Product operator
Pipelined Tensor Product operator
Pipelined Tensor Product operator
Pipelined Tensor Product operator
$W_j(i)$
$W_j(i+1)$
$W_j(i+2)$
$W_j(i+3)$
$W_j(i+4)$
2030
W supplier
$W_j(i)Q_j(i-4, i)W_j(i+1)^T$
$W_j(i)Q_j(i-3, i)W_j(i+1)^T$
$W_j(i)Q_j(i-2, i)W_j(i+2)^T$
$W_j(i)Q_j(i-1, i)W_j(i+3)^T$
$W_j(i)Q_j(i, i)W_j(i+4)^T$
Matrix Accumulator Memory
2070

FIG. 25

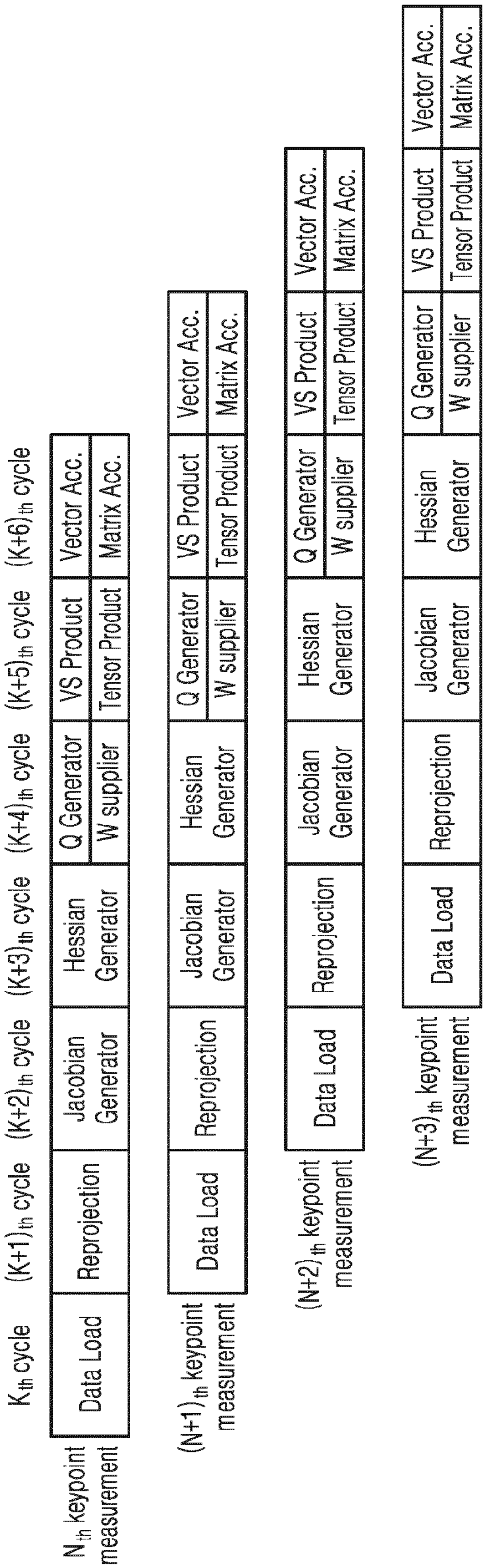
K_th cycle
(K+1)_th cycle
(K+2)_th cycle
(K+3)_th cycle
(K+4)_th cycle
(K+5)_th cycle
(K+6)_th cycle
N_th keypoint measurement
Data Load
Reprojection
Jacobian Generator
Hessian Generator
Q Generator
W supplier
VS Product
Tensor Product
Vector Acc.
Matrix Acc.
(N+1)_th keypoint measurement
(N+2)_th keypoint measurement
(N+3)_th keypoint measurement

Europäisches Patentamt
European Patent Office
Office européen des brevets

# EUROPEAN SEARCH REPORT

Application Number
EP 21 21 1620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/327395 A1 (ROUMELIOTIS STERGIOS I [US] ET AL) 10 November 2016 (2016-11-10)<br>* abstract *<br>* paragraph [0098] - paragraph [0099] *<br>* paragraph [0023] *<br>* paragraph [0090] *<br>* paragraph [0106] *<br>* figures 6,13 *<br>----- | 1-15 | INV.<br>G06T7/73 |
| X | YOUYANG FENG ET AL: "Incremental 3-D pose graph optimization for SLAM algorithm without marginalization",<br>INTERNATIONAL JOURNAL OF ADVANCED ROBOTIC SYSTEMS,<br>vol. 17, no. 3, 1 May 2020 (2020-05-01), XP055930794,<br>CR<br>ISSN: 1729-8814, DOI: 10.1177/1729881420925304<br>Retrieved from the Internet:<br>URL:http://journals.sagepub.com/doi/full-xml/10.1177/1729881420925304><br>* abstract *<br>* page 5 - page 6 *<br>----- | 1-15 | TECHNICAL FIELDS SEARCHED (IPC)<br>G06T |
| A | US 2016/305784 A1 (ROUMELIOTIS STERGIOS I [US] ET AL) 20 October 2016 (2016-10-20)<br>* abstract *<br>* paragraph [0064] *<br>-----<br>-/-- | 1-15 | |

The present search report has been drawn up for all claims

1

| Place of search | Date of completion of the search | Examiner |
|---|---|---|
| Munich | 17 June 2022 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 21 1620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI XIN ET AL: "Co-Planar Parametrization for Stereo-SLAM and Visual-Inertial Odometry", IEEE ROBOTICS AND AUTOMATION LETTERS, IEEE, vol. 5, no. 4, 26 September 2020 (2020-09-26), pages 6972-6979, XP011814010, DOI: 10.1109/LRA.2020.3027230 [retrieved on 2020-10-08] * the whole document * ----- | 1-15 | |
| | | | TECHNICAL FIELDS SEARCHED (IPC) |

1

The present search report has been drawn up for all claims

| Place of search | Date of completion of the search | Examiner |
|---|---|---|
| Munich | 17 June 2022 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 21 1620

This annex lists the patent family members relating to the patent documents cited in the above-mentioned European search report. The members are as contained in the European Patent Office EDP file on
The European Patent Office is in no way liable for these particulars which are merely given for the purpose of information.

17-06-2022

| Patent document cited in search report | Publication date | Patent family member(s) | Publication date |
|---|---|---|---|
| US 2016327395 A1 | 10-11-2016 | US 2016327395 A1 | 10-11-2016 |
| | | US 2017261324 A1 | 14-09-2017 |
| US 2016305784 A1 | 20-10-2016 | NONE | |

EPO FORM P0459

For more details about this annex : see Official Journal of the European Patent Office, No. 12/82